(19) Europäisches Patentamt
European Patent Office
Office européen des brevets

(11) **EP 2 181 202 B1**

(12) **FASCICULE DE BREVET EUROPEEN**

(45) Date de publication et mention
de la délivrance du brevet:
**27.04.2011 Bulletin 2011/17**

(51) Int Cl.:
*C25B 1/04* (2006.01)     *C25B 9/00* (2006.01)
*C25B 9/08* (2006.01)

(21) Numéro de dépôt: **08786672.9**

(22) Date de dépôt: **31.07.2008**

(86) Numéro de dépôt international:
**PCT/EP2008/060047**

(87) Numéro de publication internationale:
**WO 2009/016226 (05.02.2009 Gazette 2009/06)**

(54) **ELECTROLYSEUR HAUTE TEMPERATURE ET HAUTE PRESSION A FONCTIONNEMENT ALLOTHERMIQUE**

HOCHTEMPERATUR- UND HOCHDRUCKELEKTROLYSEUR MIT ALLOTHERMEM BETRIEB

HIGH-TEMPERATURE AND HIGH-PRESSURE ELECTROLYSER OF ALLOTHERMAL OPERATION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.08.2007 FR 0756903**

(43) Date de publication de la demande:
**05.05.2010 Bulletin 2010/18**

(73) Titulaire: **Commissariat à l'Énergie Atomique et aux Énergies Alternatives 75015 Paris (FR)**

(72) Inventeur: **AUJOLLET, Patrick F-84120 Pertuis (FR)**

(74) Mandataire: **Ilgart, Jean-Christophe BREVALEX 95 rue d'Amsterdam 75378 Paris Cedex 8 (FR)**

(56) Documents cités:
WO-A-01/11112     US-A- 2 007 096
US-A- 4 420 387     US-A- 5 964 089

• SHIN ET AL: "Evaluation of the high temperature electrolysis of steam to produce hydrogen" INTERNATIONAL JOURNAL OF HYDROGEN ENERGY, ELSEVIER SCIENCE PUBLISHERS B.V., BARKING, GB, vol. 32, no. 10-11, 7 juin 2007 (2007-06-07), pages 1486-1491, XP022117757 ISSN: 0360-3199
• B. SUNDEN: "High Temperature Heat Exchangers (HTHE)" PROCEEDINGS OF THE FIFTH INTERNATIONAL CONFERENCE ON ENHANCED, COMPACT AND ULTRA-COMPACT HEAT EXCHANGERS: SCIENCE, ENGINEERING AND TECHNOLOGY, septembre 2005 (2005-09), pages 226-238, XP002473777

EP 2 181 202 B1

**Description**

**DOMAINE TECHNIQUE ET ART ANTERIEUR**

L'invention se rapporte au domaine des électrolyses endothermiques à haute température de l'ordre de plusieurs centaines de degrés Celsius pour dissocier un réactif en phase liquide ou vapeur.

La présente invention se rapporte plus précisément à un électrolyseur haute température à fonctionnement allothermique, offrant des conditions de fonctionnement stables et homogènes.

Dans la suite, pour la clarté de l'exposé, nous prendrons le cas de l'électrolyse de l'eau.

Lors de l'établissement du courant aux bornes d'un électrolyseur, une partie de l'énergie fournie par la source de courant continu va être transformée en chaleur dans les différents conducteurs et contacts électriques, mais aussi lors du transfert des ions à travers l'électrolyte. Tous ces phénomènes dissipatifs contribuent à une perte inutile d'énergie électrique, les développements technologiques actuels portent à la fois sur la limitation de ces phénomènes et sur la durée de fonctionnement stable des électrolyseurs.

Par ailleurs, l'apport en énergie nécessaire à la réaction de dissociation de la molécule d'eau peut être décomposé en une part d'énergie électrique et une part de chaleur. La quantité maximale de chaleur qui peut être absorbée par la réaction de dissociation de l'eau augmente avec la température.

Les résultats expérimentaux actuels montrent qu'au-dessous d'un seuil de température de l'ordre de 750°C les électrolyseurs ne peuvent avoir qu'un fonctionnement exothermique, i.e. la chaleur générée par les phénomènes dissipatifs liés à l'établissement du courant électrique est supérieure ou égale à la chaleur qui peut être consommée par la réaction d'électrolyse de l'eau. La chaleur excédentaire doit alors être transmise à une source froide.

En dessus de ce seuil de température de l'ordre de 750°C que l'on appellera seuil d'endothermicité des électrolyseurs, les électrolyseurs peuvent avoir un fonctionnement autothermique c'est à dire que toute l'énergie nécessaire à la dissociation de la molécule d'eau, i.e. chaleur et travail, est apportée par le courant électrique d'alimentation des électrolyseurs.

Au dessus de ce seuil de température la théorie et les résultats expérimentaux montrent que les électrolyseurs peuvent avoir d'une manière avantageuse un fonctionnement endothermique, i.e. allothermique, c'est à dire qu'une partie de l'énergie nécessaire à la dissociation de la molécule d'eau est transmise directement sous forme de chaleur depuis une source chaude externe à l'électrolyseur.

Le fonctionnement allothermique est préférable, puisqu'il permet de réduire la quantité d'énergie électrique nécessaire à apporter à l'électrolyseur pour permettre l'électrolyse.

Est connu un électrolyseur de l'eau, dit alcalin, dans lequel la réaction d'électrolyse s'effectue en milieu liquide alcalin. L'anode et la cathode sont séparées par une membrane ionique ou un diaphragme dans laquelle circulent des ions OH⁻.

Les réactions aux électrodes s'écrivent :

- A la cathode : $2\,H_2O+2e^- \rightarrow H_2+2OH^-$
- A l'anode : $2OH^- \rightarrow +1/2O_2+2e^-$

Cet électrolyseur fonctionne aux valeurs de température inférieures à la valeur de saturation de la solution alcaline (de 80°C à 90°C sous un bar et de 130°C à 160°C sous 30 bars).

La différence de potentiel qu'il faut maintenir entre les électrodes varie entre 1,75 Volts et 2,05 Volts suivant les valeurs de résistance électrique des électrodes et de la membrane (résistance au passage de l'ion OH⁻). Ces valeurs sont supérieures à la valeur de différence de potentiel théorique (de l'ordre de 1,49 volt à ce niveau de température) strictement nécessaire pour la réaction de dissociation de l'eau liquide.

Du fait des phénomènes thermiques dissipatifs liés aux surtensions d'activation des réactions chimiques et aux valeurs basses de la conductivité des électrodes, de la solution alcaline et de la membrane ionique, entre 15 % et 25 % de l'énergie électrique totale fournie à l'appareil va être perdue sous forme de chaleur transmise à la source froide. Le fonctionnement de cet électrolyseur est par conséquent exclusivement exothermique.

Il existe également un électrolyseur à membrane protonique dont le fonctionnement est exothermique, dans lequel l'électrolyse s'effectue en phase vapeur. L'anode et la cathode sont séparées par une membrane protonique dans laquelle circulent les ions H⁺. Les réactions aux électrodes s'écrivent :

- A l'anode : $H_2O \rightarrow 1/2O_2+2H^++2e^-$
- A la cathode: $2H^++2e^- \rightarrow H_2$

La température de fonctionnement de ce type d'électrolyseur est limitée par la tenue mécanique de la membrane polymère, celle-ci se situe dans l'intervalle [300-400°C].

Il existe également des électrolyseurs fonctionnant à très hautes températures, appelés électrolyseurs à haute température à électrolyte issus de la technologie des piles à combustible à membrane oxyde (« Solid Oxyde Fuel Cell » en terminologie anglo-saxonne), fonctionnant selon le mode autothermique. Ces électrolyseurs se trouvent actuellement au stade expérimental ou de prototype de démonstration, ils sont alimentés par de la vapeur d'eau ou un mélange vapeur/hydrogène à très haute température mais ils ne peuvent pas fonctionner sous haute pression, i.e. plusieurs dizaines de bars, de vapeur d'eau ou de mélange alimentaire.

Les réactions d'oxydo-réduction aux électrodes s'écrivent :

- A l'anode, oxydation des ions oxygène : $O^{2-} \rightarrow \frac{1}{2}O_2 + 2e^-$ (I)
- A la cathode, réduction de la vapeur d'eau : $H_2O + 2e^- \rightarrow H_2 + O^{2-}$ (II)
  Pour aboutir à la réaction globale :

$$H_2O \rightarrow H_2 + \frac{1}{2} O_2.$$

La vapeur d'eau surchauffée arrive à la cathode. Aux niveaux des sites réactionnels, elle est réduite pour former de l'hydrogène et des ions $O^{2-}$. La vapeur d'eau s'enrichit en hydrogène tandis que les ions $O^{2-}$ migrent à travers la membrane sous l'effet du champ électrique. A l'anode, les ions vont libérer leurs électrons pour former les molécules d'oxygène.

Les matériaux d'électrode couramment utilisés sont du type céramique métallique, déposés sur une plaque bipolaire métallique et du type céramique conductrice d'ions pour l'électrolyte. Ces matériaux céramiques ont des valeurs de résistivité électrique et ionique qui diminuent avec la température, ce qui tend à diminuer la quantité de chaleur générée par le passage du courant électrique avec l'augmentation de la température de fonctionnement.

La conception des électrolyseurs actuellement développés où l'écoulement du mélange vapeur d'eau hydrogène sous pression s'effectue dans une cavité formée par les électrodes en matériau céramique entourées d'air à la pression atmosphérique, ne permet actuellement pas à ce type d'électrolyseur un fonctionnement à haute pression, i.e. plusieurs dizaines de bars, de mélange gazeux.

Par contre, la diminution de la quantité de chaleur générée par les phénomènes dissipatifs et l'évolution des caractéristiques thermodynamiques de la réaction de décomposition de l'eau avec la valeur de température confèrent à ce type d'électrolyseur la possibilité de fonctionnement endothermique, mais dans ce cas cela nécessite le maintien de la vapeur d'eau à une température supérieure au seuil d'endothermicité dans tout l'électrolyseur.

Il existe actuellement deux solutions pour apporter la chaleur nécessaire au fonctionnement de l'électrolyseur en mode endothermique.

La première solution décrite par Yo SHIN (INTERNATIONAL OF HYDROGEN ENERGY, VOL. 32 (2007) 1486-1491), consiste à apporter cette énergie par chauffage direct de la vapeur d'eau à dissocier à l'aide d'un échangeur de chaleur placé en amont de l'électrolyseur. Mais les calculs thermiques de simulation d'électrolyseur en fonctionnement endothermique montrent :

- qu'il est nécessaire, pour conserver de bonnes conditions de fonctionnement endothermique, i.e. une température supérieure au seuil d'endothermicité dans tout l'électrolyseur, d'avoir une surchauffe et un débit importants de la vapeur d'eau en entrée de l'électrolyseur, ce qui compte tenu du niveau de température requis (plus de 1100°C dans ce cas) va fortement grever les coûts de la chaudière et de toute l'installation,
- que cette solution n'est pas la plus indiquée pour fournir des conditions stables et homogènes en température de fonctionnement de l'électrolyseur à moins d'avoir des débits massiques importants de vapeur d'eau alimentaire.

Ceci va se traduire par des installations de conditionnement et de re-circulation de très grandes capacités lorsque la pression de vapeur d'eau supportée par les installations, l'électrolyseur notamment, ne peut dépasser des valeurs de quelques bars. Ceci va se traduire également par des vitesses, donc des pertes de charge, importantes pour les écoulements dans l'échangeur l'électrolyseur et les tuyauteries ce qui va jouer sur le coût en énergie des appareils de compression.

La deuxième solution consiste à apporter la chaleur nécessaire à l'aide d'un gaz caloporteur chaud mélangé à la vapeur d'eau ou mélange vapeur d'eau/hydrogène entrant dans l'électrolyseur, cette solution nécessite un appareil supplémentaire pour séparer les corps chimiques en aval de l'électrolyseur afin de récupérer le gaz caloporteur, ce qui occasionne des pertes de gaz caloporteur. Elle nécessite également un débit massique important de gaz caloporteur sous faible pression ce qui entraîne une limitation des performances, i.e. pertes de charges des gaz à travers l'électrolyseur et puissance limitée de l'électrolyseur.

Le document WO2004/113590 décrit un dispositif pour effectuer des électrolyses alcalines, or celles-ci n'ont lieu qu'en phase liquide, ce qui limite la température de fonctionnement à des valeurs inférieures à la température critique de l'eau, qui est de 374°C. Par conséquent, ce dispositif ne permet pas de fonctionner dans un domaine de température permettant d'atteindre des valeurs de tension réversibles pour un fonctionnement endothermique. Pour atteindre des valeurs de tension réversible suffisamment basses à de telles températures pour fonctionner en mode endothermique, il faudrait atteindre des pressions très faibles largement inférieures à 1 bar, ce qui empêche toute application à des moyennes et grosses installations. En effet, il n'est pas envisageable de concevoir des canalisations et des étages de compression permettant d'éviter de trop fortes pertes de charges pour de si faibles niveaux de pression.

Par conséquent, les solutions actuellement connues ne permettent pas de réduire de manière efficace la consommation en énergie à apporter à l'électrolyseur, puisqu'une importante surchauffe est requise.

En outre, ces électrolyseurs ne permettent pas d'assurer une température homogène au sein de l'électrolyseur. Or, pour obtenir un fonctionnement homogène de l'électrolyseur, ce qui est une des conditions de longévité des composants et de performance de l'électrolyseur, on cherche à limiter les variations de température au sein même de l'électrolyseur.

C'est par conséquent un but de la présente invention d'offrir un électrolyseur apte à fonctionner de manière endothermique avec une consommation énergétique optimisée et un fonctionnement stable et homogène en température.

C'est également un but de la présente invention d'offrir un électrolyseur haute température et haute pression dont la consommation en énergie électrique est réduite.

## EXPOSÉ DE L'INVENTION

Le but précédemment énoncé est atteint par un électrolyseur comportant un système intégré de chauffage. Ainsi le bain électrolytique est chauffé directement dans l'électrolyseur, ce qui permet de limiter la perte de chaleur et d'offrir une température sensiblement stable et homogène dans tout le bain.

En d'autres termes, le chauffage s'effectue directement dans le caisson de l'électrolyseur, ce qui simplifie le dispositif et rend l'apport d'énergie plus efficace.

L'intégration du chauffage permet d'apporter à l'électrolyseur la quantité de chaleur nécessaire à son fonctionnement, puisque celle-ci n'est plus apportée par effet Joule en fonctionnement en mode endothermique avec des termes d'irréversibilité réduits. La mise en oeuvre d'un chauffage intégré à l'électrolyseur permet de maintenir la température de toutes les cellules d'électrolyse une variation de température inférieure à 30°C entre l'entrée et la sortie de l'électrolyseur et une surchauffe de la source chaude inférieure à 50°C par rapport à la température de fonctionnement de l'électrolyseur.

L'ectrolyseur selon l'invention intègre un système de chauffage par échanges thermiques avec un fluide caloporteur provenant d'une source chaude.

Le système de chauffage comporte avantageusement un caloporteur porté à haute température par une source de chaleur extérieure, par exemple de type chaudière ou échangeur de chaleur.

Par ailleurs, l'électrolyseur selon la présente invention comporte un confinement métallique qui permet de maintenir le bain électrolytique sous haute ou très haute pression de plusieurs dizaines de bars.

La pression du bain électrolytique est alors fonction du niveau de pression pour lequel est dimensionné le caisson métallique de l'électrolyseur. Les autres éléments mécaniques, notamment les plaques d'électrolyse, sont alors assujetties à des contraintes mécaniques beaucoup plus faibles et travaillent en compression puisque les gaz formés qu'ils contiennent sont à une pression plus faible que le gaz dans lequel ils baignent.

Dans un exemple de réalisation particulièrement avantageux, le système de chauffage comporte des plaques intercalées entre des électrodes, également en forme de plaque.

Selon un mode de réalisation de la présente invention, on prévoit donc de réaliser un électrolyseur utilisant un grand nombre de cellules élémentaires de petites dimensions montées en série, ce qui permet de limiter l'intensité du courant électrique traversant les différents éléments de l'électrolyseur et par conséquent de limiter la puissance électrique dissipée sous forme de chaleur. En effet le montage en série permet de ne requérir qu'une intensité égale à celle nécessaire à une plaque, par ailleurs la plaque étant de taille réduite, la valeur de l'intensité est faible.

Le fluide caloporteur peut être en phase liquide, i.e. métal ou sel fondus ou gazeuse. Un mode préféré de réalisation sera de porter le gaz caloporteur à haute pression et de dimensionner les plaques de chauffage à cet effet.

La conception des cellules et leur disposition dans une enceinte sous pression permettent que les ensembles cathode - électrolyte - anode ne supportent pas les efforts liés aux différences de pression entre les gaz qui s'écoulent. Les efforts dus aux différences de pression entre la vapeur d'eau et les gaz produits ou entre la vapeur d'eau et le fluide caloporteur ou entre la vapeur d'eau et l'extérieur sont supportés par les éléments internes de la cuve, comme les montants des cadres métalliques, et la calandre des échangeurs de chaleur pour le caloporteur liquide, et par l'enceinte de l'électrolyseur.

Par conséquent, les ensembles cathode-électrolyte-anode peuvent être optimisés pour offrir une résistance électrique réduite en réduisant leur épaisseur, une résistance ionique et une résistance à la diffusion des gaz dans les électrodes réduites en augmentant leur porosité, tout en permettant un fonctionnement à un niveau de pression élevé dans l'enceinte de l'électrolyseur.

La présente invention a alors principalement pour objet un électrolyseur selon la revendication 1 pour électrolyse haute température apte à fonctionner en mode endothermique comportant au moins une anode et une cathode associées et des moyens de chauffage d'un fluide actif destiné à subir une électrolyse haute température, lesdits moyens de chauffage étant intégrés à l'électrolyseur. Ainsi le chauffage est plus efficace et plus homogène dans l'électrolyseur.

De manière préférée, les moyens de chauffage utilisent un fluide caloporteur chauffé, par exemple par une chaudière classique à combustible fossile ou à biomasse ou une chaudière nucléaire à très haute température ou l'énergie solaire ainsi le recours à l'énergie électrique est réduit.

La présente invention a alors principalement pour objet un électrolyseur selon la revendication 1 pour électrolyse haute température apte à fonctionner en mode allothermique comportant une enceinte, au moins une plaque d'électrolyse comportant une anode et une cathode associées et des moyens de chauffage d'un fluide actif destiné à subir une électrolyse haute température, caractérisé en ce que l'enceinte est apte à maintenir un bain électrolytique sous haute ou très haute pression de plusieurs dizaines de bars, en ce que lesdits moyens de chauffage sont disposés dans l'enceinte et utilisent un fluide caloporteur. Le fluide actif est un gaz.

La plaque de chauffage a sensiblement la même taille que la plaque d'électrolyse et comporte une enveloppe métallique dans laquelle est disposé un corps d'échanges thermiques comportant une pluralité de canaux s'étendant entre une extrémité alimentée en fluide caloporteur chaud et une extrémité reliée à un collecteur de fluide caloporteur froid.

Le fluide caloporteur peut être un gaz sous haute pression, par exemple de l'hélium. Il peut également être un métal fondu, par exemple du zinc, ou des sels fondus, ce permet de réduire les pertes de charge.

L'enceinte comporte par exemple une chambre inférieure, un caisson médian un chambre supérieure.

La plaque d'électrolyse comporte, par exemple un corps central formé par une âme électriquement conductrice sous forme de plaque, recouverte sur ses deux faces par l'anode, elle-même recouverte par un électrolyte, lui-même recouvert par la cathode et un cadre électriquement conducteur entourant le corps central et exerçant un effort de compression sur les couches formant le corps central Le cadre permet de rigidifier la plaque d'électrolyse et d'améliorer contact entre les couches.

Une broche d'anode est connectée à l'âme pour relier l'anode à une source de courant électrique et la cathode est reliée électriquement au cadre portant lui-même une broche de cathode, la broche d'anode et la broche de cathode étant disposées à des extrémités opposées l'une de l'autre de la plaque d'électrolyse. Cette disposition des broches d'anode et de cathode permet une connexion en série facilitée.

L'électrolyseur comporte avantageusement au moins un canal pratiqué dans l'anode et un embout de collecte relié à ce canal pour amener le ou les gaz produits à l'anode à l'extérieur de l'électrolyseur, la pression du ou des gaz produits à l'anode étant inférieure à celle du bain électrolytique à la cathode, l'anode, l'électrolyte et la cathode étant ainsi pressés les uns contre les autres. L'électrolyseur peut alors comporter des canaux formés par des rainures réalisées dans l'âme et des réservoirs, l'un des réservoirs étant relié à l'embout de collecte du ou des gaz connecté à un collecteur principal.

L'électrolyseur selon l'invention comporte une pluralité de plaques d'électrolyse et de plaques de chauffage, les plaques d'électrolyse étant disposées entre deux plaques de chauffage.

Dans un mode de réalisation, les plaques d'électrolyse sont reliées électriquement en série, les plaques d'électrolyse adjacentes étant montées dans l'enceinte de telle sorte que la broche d'anode d'une plaque d'électrolyse traverse la chambre inférieure et la broche d'anode de la plaque adjacente traverse la chambre supérieure d'anode, ce qui permet de limiter la quantité de courant d'alimentation requise.

Dans un autre mode de réalisation, les plaques d'électrolyse sont toutes reliées en parallèle.

Dans une variante, elles sont réparties en groupes reliés électriquement en parallèle, les groupes étant reliés entre eux en série, les plaques d'électrolyse d'un même groupe étant montées dans le caisson de telle sorte que toutes les broches d'anode de ces plaques traversent la même chambre inférieure ou supérieure, deux groupes adjacents ayant leurs broches d'anode ne traversant par la même chambre, ce qui permet d'adapter l'électrolyseur à l'alimentation électrique.

Les plaques d'électrolyse sont montées par exemple dans l'enceinte au moyen de glissières réalisées sur le caisson médian, des moyens isolant électrique étant prévus entre les plaques et les glissières, et dans lequel les plaques de chauffage sont également montées dans des glissières prévues sur le caisson médian.

Les chambres supérieure et inférieure comportent des ouvertures de passage des embouts de fluide caloporteur, de collecte du gaz produit à l'anode et des broches d'anode et de cathode et un passage principal pour le fluide actif, ce qui permet de réaliser des connexions fluidiques et électriques à l'extérieur de l'électrolyseur.

Les ouvertures pour le passage des broches d'anode et de cathode sont avantageusement recouvertes par un canal de refroidissement des connexions électriques, ce qui permet d'améliorer la conductivité électrique des connexions.

Les ouvertures pour le passage des broches d'anodes et de cathode sont avantageusement réalisées dans un renfoncement des chambres supérieure et inférieure pour réduire la longueur des conducteurs électriques.

On peut prévoir de disposer une plaque de connexion autour des broches d'anode et/ou de cathode sur la chambre supérieure à l'extérieur de celle-ci et une plaque de connexion autour des broches d'anode et/ou de cathode sur la chambre inférieure à l'extérieur de celle-ci.

La présente invention a également pour objet une installation de production de gaz par électrolyse comportant :

- au moins un électrolyseur selon la présente invention,
- une alimentation électrique à tension donnée,

dans laquelle les plaques d'électrolyse sont regroupées en plusieurs groupes, les plaques d'électrolyse étant reliées en série au sein d'un même groupe et les groupes étant reliés en parallèle, le nombre de plaques d'électrolyse de chaque groupe étant choisi de telle sorte que la tension de chaque groupes de plaques d'électrolyse soit proche de la tension donnée de l'alimentation électrique.

Cette configuration permet de ne pas utiliser de transformateur en sortie de l'alimentation électrique.

La présente invention a également pour objet un procédé de fabrication d'au moins un gaz par électrolyse mettant en oeuvre un électrolyseur selon la présente invention, dans lequel la pression du bain d'électrolyse est sensiblement égale à sa pression habituelle de stockage et/ou de distribution dudit gaz, par exemple entre 30 bars et 130 bars.

Le rapport entre le débit molaire de vapeur d'eau et le débit molaire de dihydrogène produit a avantageusement une valeur de 2 à 5, ce qui permet d'obtenir une pression de vapeur en dihydrogène en sortie de l'électrolyseur élevée tout en assurant une couche suffisante d'eau sur les plaque d'électrolyse.

## BRÈVE DESCRIPTION DES DESSINS

La présente invention sera mieux comprise à l'aide de la description qui va suivre et des dessins en annexe, sur lesquels :

- la figure 1A est une représentation schématique d'une chambre de collecte de l'hydrogène généré et d'alimentation en caloporteur chaud pour un électrolyseur selon la présente invention,
  la figure 1B est une représentation schématique d'une chambre d'alimentation de l'électrolyseur et de collecte du caloporteur froid pour un électrolyseur selon un la présente invention,
- les figures 2A et 2B représentent respectivement des vues en perspective d'un corps central d'une plaque d'électrolyse dans un état intermédiaire selon la présente invention,
- la figure 3 est une vue en perspective du corps central complet,
- la figure 4 est une vue en coupe longitudinale du corps central,
- la figure 5 est une vue en perspective d'un cadre destiné à entourer le corps central pour former la plaque d'électrolyse,
- la figure 6 est une vue en perspective de la plaque d'électrolyse,
- les figures 7A et 7B sont des vues en coupe transversale d'un électrolyseur selon l'invention au niveau d'une plaque d'électrolyse,
- les figures 8A à 8C représentent respectivement des vues de face, en coupe transversale et en coupe longitudinale d'une plaque de chauffage pour un électrolyseur selon la présente invention,
- la figure 9 est une vue en coupe transversale d'un électrolyseur selon l'invention au niveau d'une plaque de chauffage,
- la figure 10 est un vue de face d'une face intérieure d'une paroi latérale de l'électrolyseur portant des glissières destinées à recevoir les bords latéraux des plaques d'électrolyse et des plaques de chauffage,
- la figure 11 est une vue de dessus de l'électrolyseur dans le cas d'un branchement des plaques d'électrolyse en série,
- les figures 12A à 12C sont respectivement des vues de dessous, en coupe longitudinale et de dessus d'une plaque de connexion pour la connexion sur la chambre supérieure,
- la figure 13 est une vue de dessous d'une plaque de connexion montée sur la chambre inférieure,
- les figures 14A et 14B sont des représentations schématiques des connexions électriques des plaques d'électrolyse dans le cas d'un branchement parallèle par sous groupes,
- la figure 15 représente une distribution des valeurs de température d'un mélange eau/hydrogène et du fluide caloporteur le long d'une plaque électrolyse d'un électrolyseur selon la présente invention dans un mode fonctionnement co-courant,
- les figures 16A et 16B représentent deux cas de distribution des valeurs de température d'un mélange eau/hydrogène et du fluide caloporteur le long d'une plaque d'électrolyse d'un électrolyseur selon la présente invention dans un mode fonctionnement à contre-courant,
- la figure 17 représente les fonctions thermodynamiques de la réaction de dissociation de l'eau,
- la figure 18 représente la répartition chaleur/électricité en fonction de la température pour les électrolyseurs actuels sous la forme d'un graphique en bâton,

- la figure 19 représente un exemple de caractéristique d'électrolyseur, sur laquelle on peut voir l'évolution du potentiel en fonction de la densité de courant,
- la figure 20 représente la courbe de distribution de température du mélange dans l'électrolyseur sans chauffage intégré dans le cas d'un électrolyseur à fonctionnement allothermique de l'état de la technique.

## EXPOSÉ DÉTAILLÉ DE MODES DE RÉALISATION PARTICULIERS

A titre d'illustration, nous allons exposer les différents régimes de fonctionnement en eau d'une cellule élémentaire d'électrolyse composée d'une anode alimentée par un courant électrique 1 d'une cathode et d'un électrolyte.

La réaction de décomposition de l'eau est une transformation endothermique, l'équation de Gibbs-Helmholtz montre que la variation d'enthalpie libre d'un mélange réactifs-produits lors d'une réaction endothermique diminue avec la température de réaction, ce qui veut dire de manière plus schématique, que plus la température du mélange vapeur d'eau, hydrogène, et oxygène formé sera élevée, plus la part d'énergie électrique nécessaire à la dissociation des molécules d'eau sera réduite, et plus la part d'énergie thermique nécessaire au maintien à température constante du mélange sera élevée.

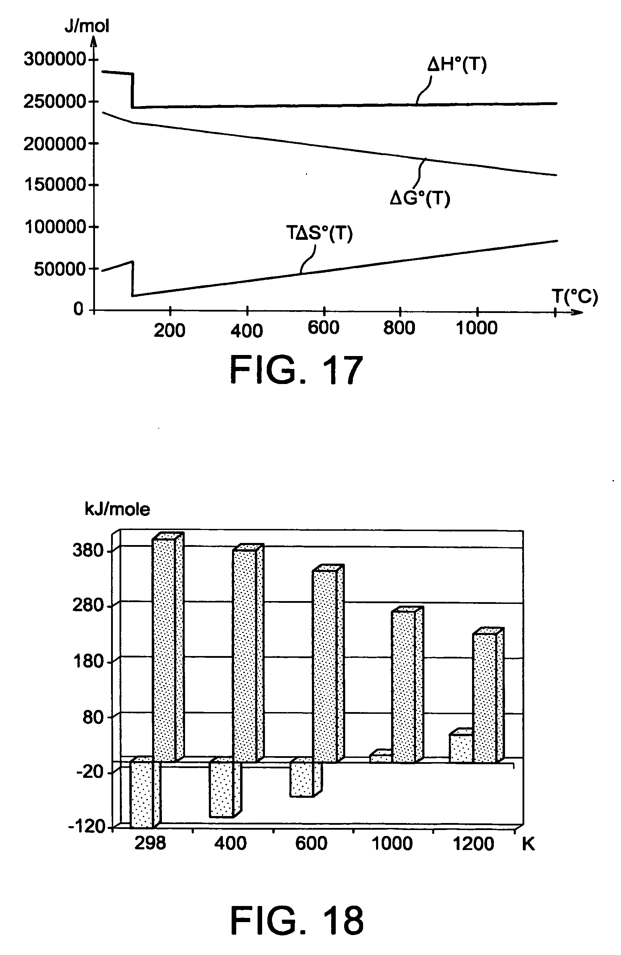

Les valeurs en fonction de la température de $\Delta G°$, $\Delta H°$ et $T*\Delta S°$, ($\Delta H°$ étant la demande énergétique totale $\Delta H° = T*\Delta S° + \Delta G°$) de dissociation d'une mole de d'eau sous une pression de 1 bar (conditions standards) sont représentées par les courbes $\Delta G°$, $\Delta H°$, $T*\Delta S°$ respectivement sur le graphique de la figure 17 avec, à la température de saturation, la diminution de $T*\Delta S°$ égale à la chaleur de vaporisation d'une mole d'eau.

Dans le domaine concerné par l'invention c'est à dire en phase vapeur, les valeurs de $\Delta H°$ et de $\Delta S°$ sont pratiquement constantes et l'énergie thermique qui peut être apportée lors de la dissociation d'une mole d'eau vapeur représentée par le produit de l'entropie par la température $T*\Delta S°$ est proportionnelle à la température. Le terme $\Delta G°(T)$ représentant la demande en énergie électrique pour la transformation des corps purs à la température T diminue alors de manière linéaire avec la température.

Dans ces conditions, on considère la réaction globale d'électrolyse d'une mole d'eau en phase vapeur à la température T à la pression totale P :

$$H_2O(g) \rightarrow H_2(g) + 1/2 O_2(g) \qquad (1).$$

Cette réaction s'accompagne d'une variation d'enthalpie libre $\Delta G$.

Si on fait, à des fins de simplification de l'exposé, l'hypothèse de la loi de Raoult sur les mélanges de gaz parfaits, la variation d'enthalpie libre $\Delta G$ représentant la demande en énergie électrique pour la dissociation d'une mole d'eau sous forme vapeur s'écrit :

$$\Delta G(T,P)= \Delta G°(T,P_0) + RT * Ln(P_{H2} * P_{O2}{}^{\frac{1}{2}}/P_{H2O}),$$

où $\Delta G°(T)$ est la variation d'enthalpie libre standard de Gibbs à la température T sous $P_0 = 1$ bar.

$P_{H2}$, $P_{O2}$ sont les pressions partielles des gaz, en bar ;

$P_{H2O}$ est la pression partielle de la vapeur d'eau, en bar ;

T est la température, en °K;

R est la constante des gaz parfaits ($8,314$ J.mol$^{-1}$K$^{-1}$).

$\Delta G$ représente l'énergie à apporter pour dissocier une mole de vapeur d'eau à la température T sous la pression totale P.

$2F*E$ est l'énergie électrique fournie lors du passage du potentiel de référence zéro au potentiel E d'une charge de 2F (F étant le nombre de faraday : valeur absolue de la charge d'une mole d'électrons, soit 96485 C).

La valeur absolue du potentiel d'équilibre (à courant nul) s'écrit donc :

$$E_{i=0} = \Delta G/2F.$$

Il vient donc (loi de Nernst) :

$$E_{i=0} = E° + (RT/2F) * Ln (P_{H2} * P_{O2}^{\frac{1}{2}}/P_{H2O}).$$

E° étant égal à ΔG°/2F.

En circuit fermé, la tension à appliquer aux bornes de la cellule d'électrolyse est supérieure à la tension réversible $E_{i=0}$ donnée par la loi de Nernst. En effet, avec l'établissement d'un courant d'intensité 1 dans les différents éléments qui composent la cellule, de nombreux phénomènes d'irréversibilité se produisent.

Les phénomènes principaux sont :

- les résistances ($R_{ohmique}$) vis-à-vis du passage du courant dans les matériaux et les interconnexions qui provoquent des chutes ohmiques ; un des facteurs de perte est lié à l'électrolyte solide.
- les surtensions ($\eta$) d'électrodes, liées à l'activation des réactions élémentaires aux interfaces électrodes gaz ainsi qu'à la diffusion des gaz dans les électrodes.

La tension à appliquer aux bornes de l'électrolyseur s'écrit alors :

$$E = E_{i=0}+R_{ohmique}*I+\sum \eta.$$

Ou encore :

$$E = E°+(RT/2F)*Ln(P_{H2}*P_{O2}^{\frac{1}{2}}/P_{H2O})+R_{ohmique}*I+\sum \eta.$$

Les valeurs de résistances ohmiques et de surtensions dépendent des caractéristiques physiques des électrolyseurs. Les résistivités ohmiques diminuent avec la température de fonctionnement.

Comme nous l'avons déjà indiqué précédemment, pour les appareils actuels, en dessous d'un seuil de température de l'ordre de 750°C (dont la répartition chaleur/électricité en fonction de la température est représentée sur la figure 18) la quantité de chaleur générée par effet Joule du fait de l'alimentation électrique des cellules d'électrolyse est supérieure à la chaleur consommée par la réaction d'électrolyse, le fonctionnement de l'ensemble est alors exothermique.

Les développements technologiques en cours, notamment dans le choix des matériaux et dans la réduction des épaisseurs d'électrode et d'électrolyte en balance avec les contraintes de tenue mécanique, tendent à abaisser le seuil de température à partir duquel l'électrolyseur fonctionne de manière endothermique.

Lors de l'électrolyse, une quantité d'énergie correspondant à la part entropique T*ΔS doit être apportée au procédé sous forme de chaleur. Une partie de cette chaleur est produite par effet Joule au sein de l'électrolyseur, dépendant de l'intensité du courant 1 traversant la cellule d'électrolyse :

Dans le cas où :

$$R_{ohmique} \; I^2 + \sum \eta *I > T* \; \Delta S*I/2F,$$

l'électrolyseur produit trop de chaleur, il est en fonctionnement exothermique, le maintien à température constante des réactifs et des produits nécessite alors l'évacuation de la chaleur vers une source froide.

Dans le cas où :

$$R_{ohmique} \; I^2 + \sum \eta *I = T* \; \Delta S*I/2F$$

l'électrolyseur produit suffisamment de chaleur, il est à l'équilibre thermique, le maintien à température des réactifs et des produits ne nécessite pas de source de chaleur externe, l'électrolyseur fonctionne donc en mode autothermique, c'est-à-dire sans source de chaleur externe.

Dans le cas où :

$$R_{ohmique} \, I^2 + \sum \eta * I < T * \Delta S * I / 2F,$$

la chaleur produite par l'électrolyseur ne suffit pas à maintenir en équilibre thermique la réaction de dissociation de l'eau, l'électrolyseur est en fonctionnement endothermique, un apport en chaleur provenant d'une source chaude externe est alors nécessaire pour le maintenir à température constante. Le mode de fonctionnement est alors allothermique.

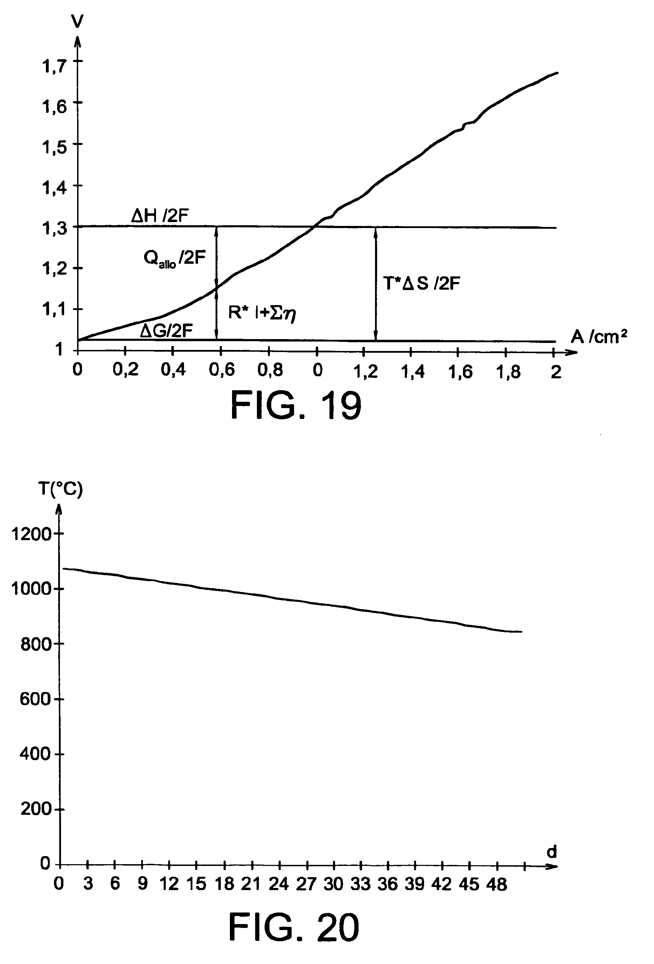

A titre d'exemple, la figure 19 représente l'évolution calculée du potentiel E : ($E = E_{i=0} + R_{ohmique} * I + \sum \eta$) en V en fonction de la densité de courant Dc sur une plaque d'électrolyse (rapport I/S en A/cm$^2$ où 1 est l'intensité du courant d'alimentation de la plaque en A et S la surface d'anode/électrolyte/cathode en cm$^2$) pour une pression totale de 30 bars, une température de 900°C, une moyenne du rapport $P_{H2}/P_{H2O}$ fixée à 0,5 et une épaisseur d'électrolyte de 30 $\mu$m.

Au-dessus du potentiel V1 de valeur $\Delta H/2F$, le fonctionnement est exothermique.

Le potentiel V2 d'une valeur $\Delta G/2F$ est le potentiel minimum requis pour l'électrolyse.

Entre les potentiels V1 et V2, le fonctionnement est endothermique.

Dans l'exemple de plaque d'électrolyse dont la caractéristique est représentée sur la figure 19, la valeur de densité de courant 0,99 A.cm$^{-2}$, correspondant au point particulier de l'équilibre thermique. Au-dessus, l'hydrogène sera produit selon le mode exothermique.

Le fonctionnement allothermique de la plaque d'électrolyse se situe dans ce cas sur la plage de densité de courant allant de 0 A.cm$^{-2}$ à 0,98 A.cm$^{-2}$, les surtensions et les pertes ohmiques $\Delta$élec ne produisent pas assez de chaleur, il faut donc amener pour chaque mole d'eau dissociée une quantité de chaleur $Q_{allo}$ d'une source externe.

L'électrolyseur selon la présente invention permet d'effectuer des électrolyses en fonctionnement allothermique dans des conditions stables et homogènes de température.

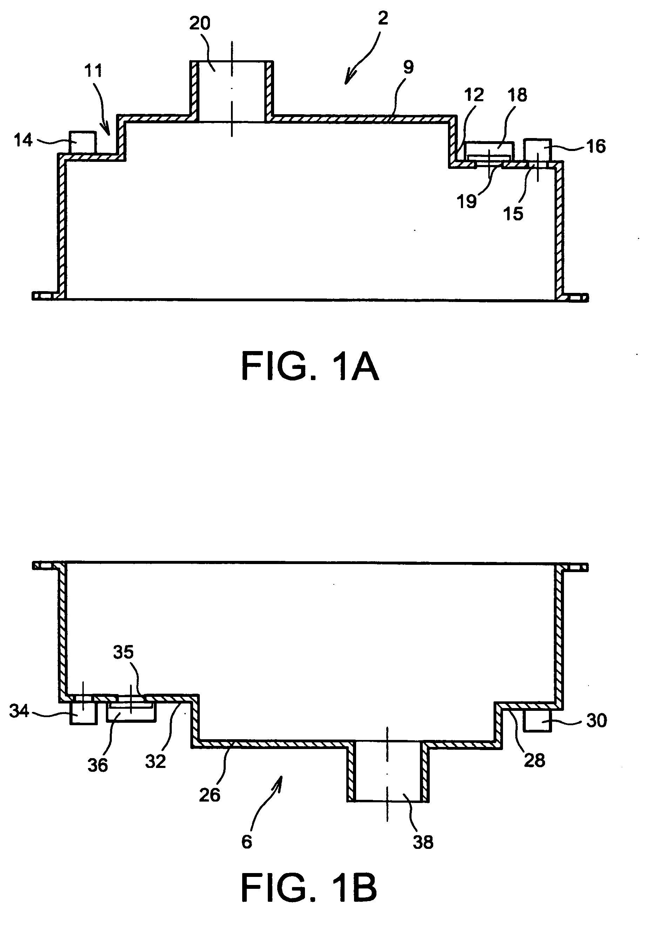

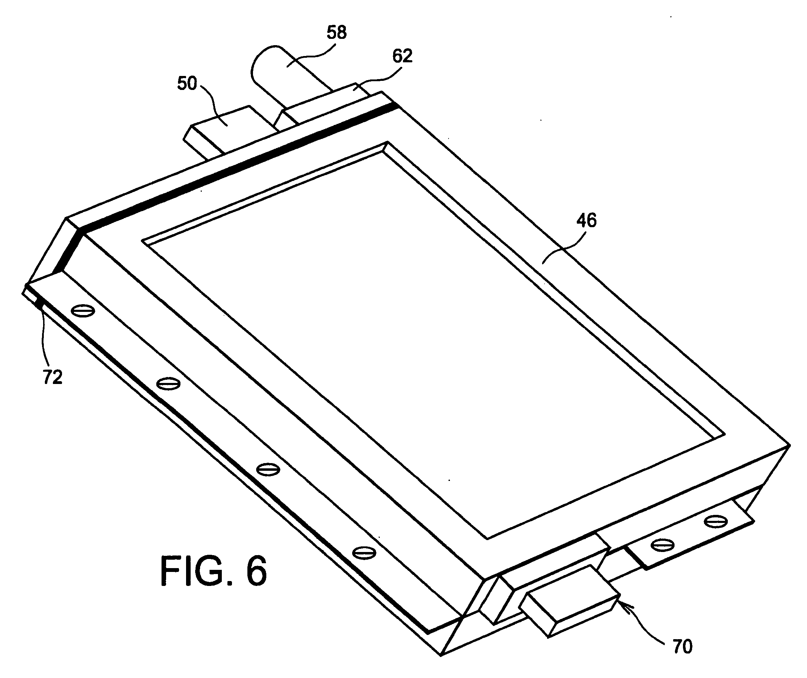

Sur les figures 1 à 13, nous pouvons voir les différents éléments d'un électrolyseur échangeur selon la présente invention avec une alimentation électrique des plaques d'électrolyse en série.

Dans la suite de la description, nous désignerons l'électrolyseur échangeur par électrolyseur à des fins de simplicité.

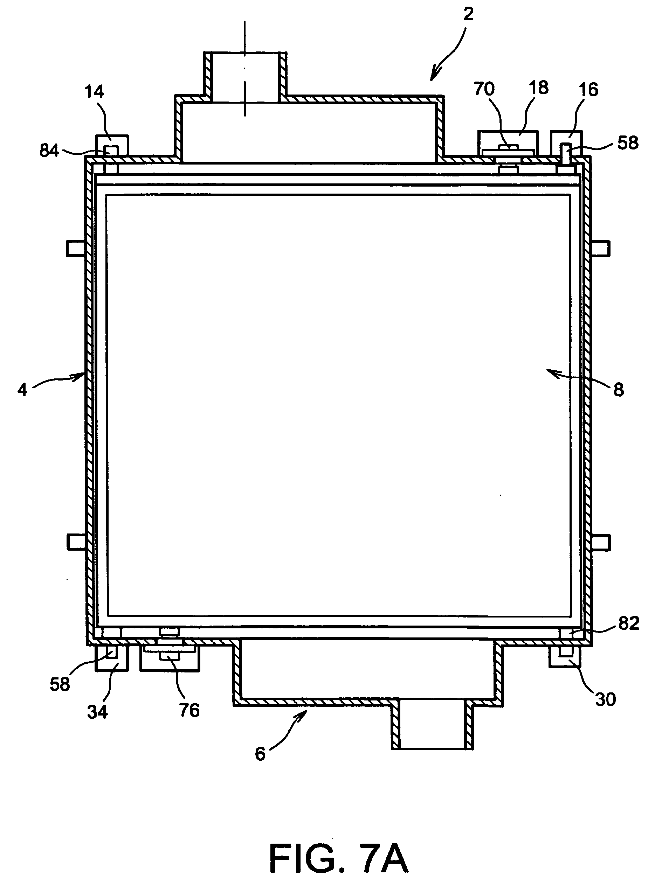

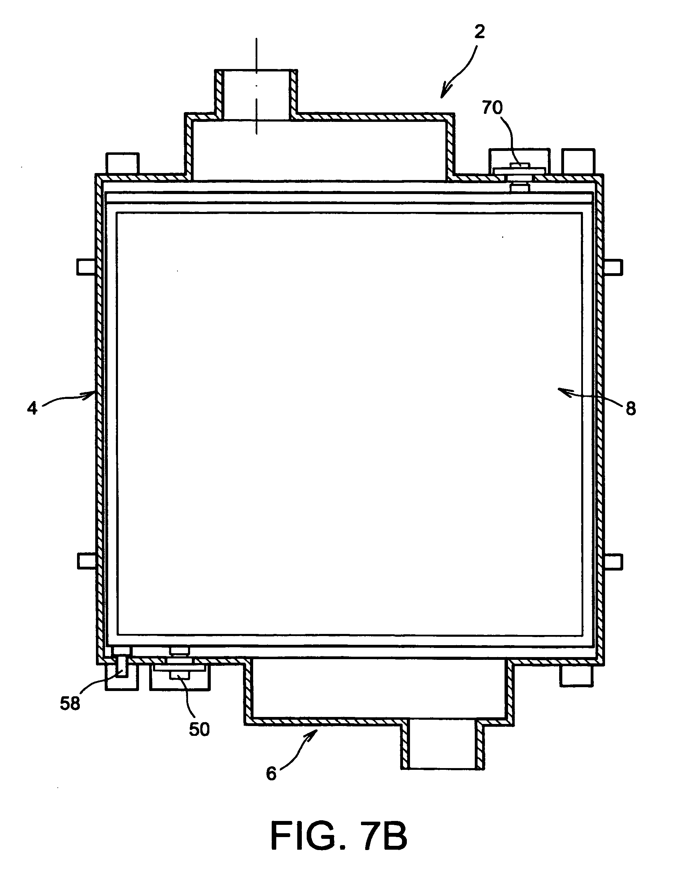

Comme on peut le voir sur les figures 7A et 7B, l'électrolyseur comporte une chambre supérieure 2 formant chambre de collecte du dihydrogène H$_2$ produit, d'un caisson médian 4 et d'un chambre inférieure 6 formant chambre d'alimentation en vapeur d'eau. Ces trois éléments peuvent être soudés entre eux ou assemblés par des brides 7 pour former une enceinte métallique étanche de forme proche d'un parallélépipède rectangle remplie majoritairement de vapeur d'eau sous haute pression i.e. une pression de plusieurs de plusieurs dizaines de bars. Avantageusement, ces pressions correspondent aux pressions de stockage et de transport un gaz produire, afin de limiter les étapes de compression ultérieures. Ces pressions sont par exemple comprises entre 30 bars et 130 bars, voire au-delà.

L'enceinte peut être réalisée par exemple en acier 800 H ou en Hastelloy avec une épaisseur déterminée, par exemple de l'ordre de plusieurs centimètres. L'épaisseur des parois de l'enceinte peut être déterminée en fonction du niveau de pression selon *les Règles de Conception et de Construction des Matériels.*

Compte tenu de la forme simple du caisson d'électrolyse, on peut prévoir un chemisage en carbure de silicium (SiC) des parois internes d'un ou plusieurs centimètres pour protéger l'enveloppe mécanique contre les phénomènes de corrosion et abaisser légèrement la température de la paroi mécanique. On peut également utiliser des techniques de revêtements en verre réfractaire pour protéger les parois internes de l'enveloppe mécanique. Le chemisage carbure de silicium contribue également à limiter les pertes thermiques de l'appareil.

Selon la présente invention, l'électrolyseur comporte également des moyens de chauffage interne à l'électrolyseur, utilisant un fluide caloporteur. Dans l'exemple représenté, les moyens de chauffage sont formés par des plaques de chauffage 10 disposées en alternance avec les plaques d'électrolyse 8 dans l'enceinte étanche.

Le caloporteur est destinée à circuler dans les plaques de chauffage 8 pour chauffer le fluide contenu dans l'enceinte par échange thermique. Le caloporteur est porté à haute température par une source de chaleur extérieure, par exemple de type chaudière ou échangeur de chaleur.

Le fluide caloporteur peut être en phase liquide, i.e. métal ou sel fondus ou gazeuse. Le fluide caloporteur peut également être un gaz sous haute pression, par exemple de l'hélium. Le fluide caloporteur peut être de nature différente de celle du fluide destiné à subir l'électrolyse et ou des produits de l'électrolyse.

L'alimentation électrique des plaques d'électrolyse s'effectue au niveau des chambres supérieure 2 et inférieure 6.

Nous allons dans la suite de la description décrire de manière détaillée chacun des composants de l'électrolyseur.

La chambre supérieure 2 est en forme de boîtier ouvert dont la face supérieure 9 comporte un premier renfoncement 11 pourvu d'une pluralité d'ouvertures 13 alignées pour le passage d'embouts des plaques de chauffage, recouvertes par un conduit de distribution du caloporteur chaud 14 fixé de manière étanche ou soudé sur la face supérieure 9.

La surface supérieure 9 comporte un deuxième renfoncement 12 pourvu d'un pluralité d'ouvertures 15 pour le passage des embouts de collecte d'oxygène des plaques d'électrolyseur 8 recouvertes par un conduit supérieur de collecte de l'oxygène 16, celui-ci étant fixé de manière étanche ou soudé sur la face supérieure 9.

De manière avantageuse, un canal de refroidissement 18 des connexions électriques supérieures est également fixé de manière étanche ou soudé dans le deuxième renfoncement 12, recouvrant une pluralité d'ouvertures 19 pour le passage des broches d'anode ou de cathode des plaques d'alimentation.

La chambre supérieure 2 comporte également un conduit principal 20 de sortie du mélange eau vapeur/hydrogène formé dans l'échangeur électrolyseur.

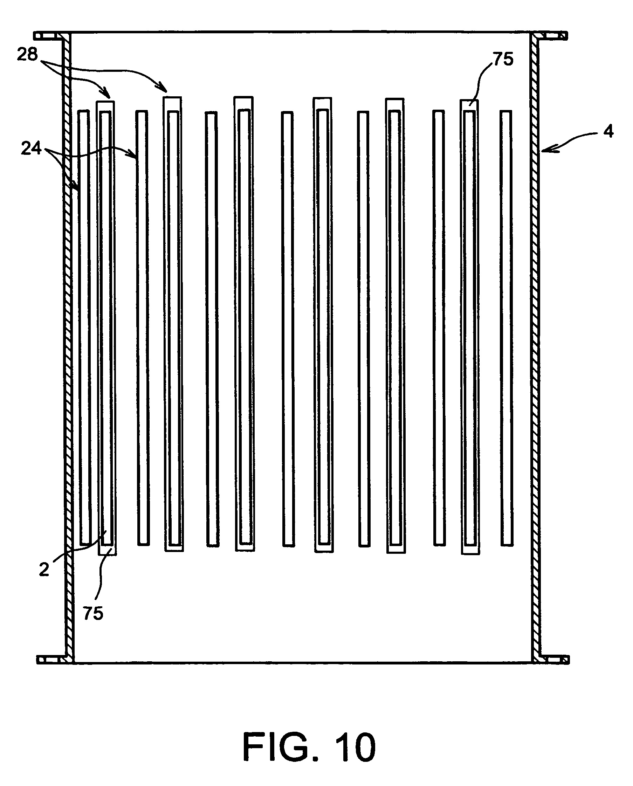

Le caisson médian 4 comporte une enveloppe métallique de forme parallélépipédique ouverte avec sur deux faces opposées des glissières latérales 22, 24, comme représentées sur la figure 10, dans lesquelles sont insérées les plaques d'électrolyse 12 en alternance avec les plaques de chauffage 8 respectivement.

La chambre inférieure 6 est de forme très proche de celle de la chambre supérieure 2. Elle est en forme un boîtier ouvert dont la face inférieure 26 comporte également un renfoncement 28 muni d'une série d'ouvertures 29 pour le passage des embouts de collecte du fluide froid, ces ouvertures 29 étant recouvertes par un conduit de collecte 30 du caloporteur froid soudé sur le renfoncement 28, et un autre renfoncement 32 comportant des ouvertures 33 pour le passage des embouts de collecte de l'oxygène, recouverts par un conduit 34 inférieur de collecte de l'oxygène, fixé de manière étanche ou soudé sur le renfoncement 32.

Un canal de refroidissement 36 des connexions électriques inférieures est également avantageusement prévu au dessus d'ouvertures 35 pour le passage des broches d'anode et ou de cathode et est soudé sur le renfoncement 32. La chambre inférieure 2 comporte également un conduit principal 38 d'alimentation en eau vapeur sous pression.

Dans l'exemple représenté, l'alimentation électrique des plaques d'électrolyse par la source de puissance électrique s'effectue par des tresses métalliques situées dans les canaux de refroidissement 18, 36 ce qui permet d'obtenir une très bonne conductivité électrique des conducteurs métalliques. En outre, les connexions électriques ont lieu à l'extérieur de l'électrolyseur et donc ne sont pas soumises à la haute température dans l'électrolyseur.

Nous allons maintenant décrire une plaque d'électrolyse 8 selon l'invention, celle-ci comporte un corps central 8.1 et un cadre 8.2.

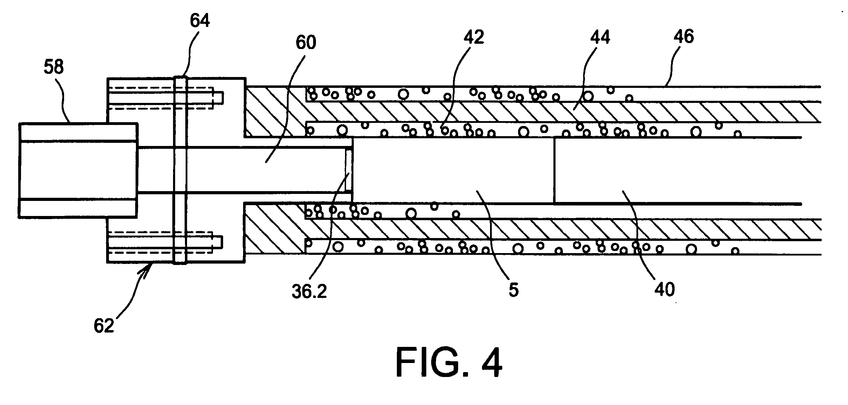

De manière générale, le corps central 8.1 selon l'invention est stratifié, i.e. il est formé par une superposition de couches. Ces couches sont particulièrement visibles sur la vue en coupe longitudinale d'une plaque d'électrolyse de la figure 4.

Le corps central 8.1 selon l'invention comporte une âme rigide 40, recouverte par une anode 42 sur ses deux faces principales, d'un électrolyte 44 recouvrant l'anode et d'une cathode 46 recouvrant l'électrolyte 44.

L'âme 40 est avantageusement métallique pour conduire le courant elle peut être également réalisée en matériau céramique à forte densité et conducteur de l'électricité, par exemple avec le matériau utilisé pour réaliser l'anode mais à très forte densité. Elle a sensiblement une forme rectangulaire de quelques millimètres d'épaisseur et comporte à une extrémité longitudinale une tête 48 plus épaisse, par exemple de l'ordre de un à deux centimètres d'épaisseur, de laquelle est solidaire une broche d'anode 50, la broche d'anode 50 étant destinée à relier l'anode 42 à l'alimentation électrique.

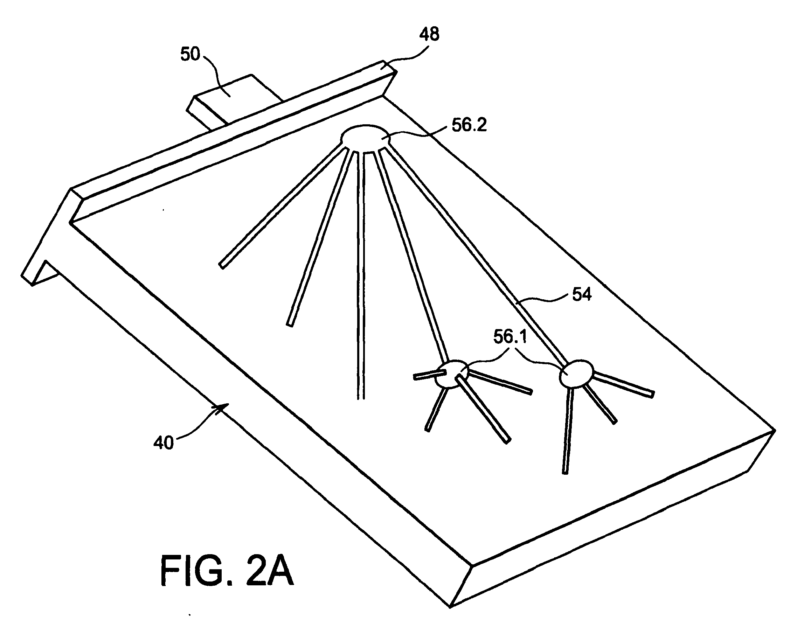

L'âme 40 comporte, de manière avantageuse des moyens 52 pour drainer l'oxygène généré à l'anode 42. Ces moyens de drainage 52 sont formés, dans l'exemple représenté, par des rainures 54 réalisées dans chaque face de l'âme et des réservoirs 56, comme on peut le voir sur la figure 2A. Les réservoirs 56 se décomposent en réservoirs intermédiaires 56.1 collectant l'oxygène à différents endroits de l'anode et d'un réservoir principal 56.2 relié à tous les réservoirs intermédiaires 56.1 par des rainures 54 et relié directement à un collecteur d'oxygène.

Les rainures 54 et réservoirs 56.1, 56.2 sont remplis d'un matériau poreux et bon conducteur électrique, par exemple une mousse métallique afin de permettre le dépôt de la couche formant anode sur les faces de l'âme métallique.

Les rainures 54 sont réalisées sur les faces de l'âme de manière à assurer une collecte efficace de l'oxygène de manière uniforme. Celles-ci ont des dimensions variables en fonction de leur longueur et de leur positionnement sur la plaque.

Le réservoir principal 56.2, comme on peut le voir sur la figure 4, est formé par un évidemment traversant rempli de mousse métallique. Celui-ci est relié à un ajutage d'un embout 58 de collecte de l'oxygène par un alésage 60 pratiqué longitudinalement dans l'âme métallique.

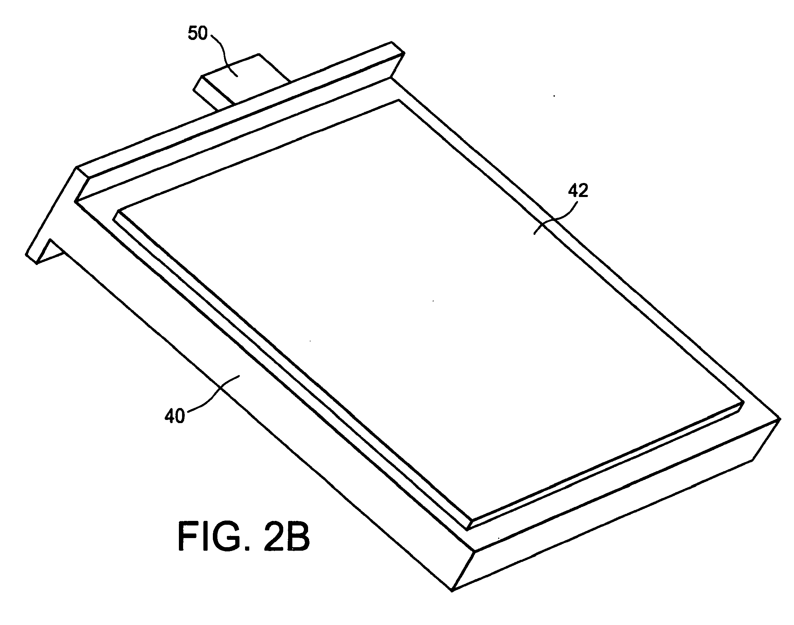

L'anode 42 est du type anode céramique poreuse et très bonne conductrice de l'électricité, par exemple en manganite de lanthane dopée strontium ou matériau équivalent. Celle-ci est déposée en couche mince, de l'ordre du dixième de millimètre. Sur la figure 2B, on peut voir l'âme métallique 40 recouverte de l'anode 42.

L'électrolyte 44 est étanche et isolant électrique, et bon conducteur ionique, il est par exemple réalisé en zircone stabilisée déposée en couche très mince, par exemple de l'ordre de 40 $\mu$m sur l'anode 42. L'électrolyte est déposé en couche plus épaisse sur la partie de l'âme métallique 40 non couverte par l'anode, afin de réaliser une surface plane continue.

La cathode 46 est par exemple en céramique métallique, en nickel, en zircone stabilisée. Celle-ci est déposée en couche mince de l'ordre du dixième de millimètre sur l'électrolyte 44.

Comme nous l'avons indiqué précédemment, la plaque d'électrolyse 8 comporte un embout métallique 58 se raccordant au réservoir principal 56.2.

Cet embout 58 peut par exemple être brasé sur un support métallique 62 plaqué sur la tête de l'âme métallique 40 au moyen des vis électriquement isolées, un joint d'isolation électrique et d'étanchéité 64 étant prévu entre la tête de l'âme 40 et le support 62.

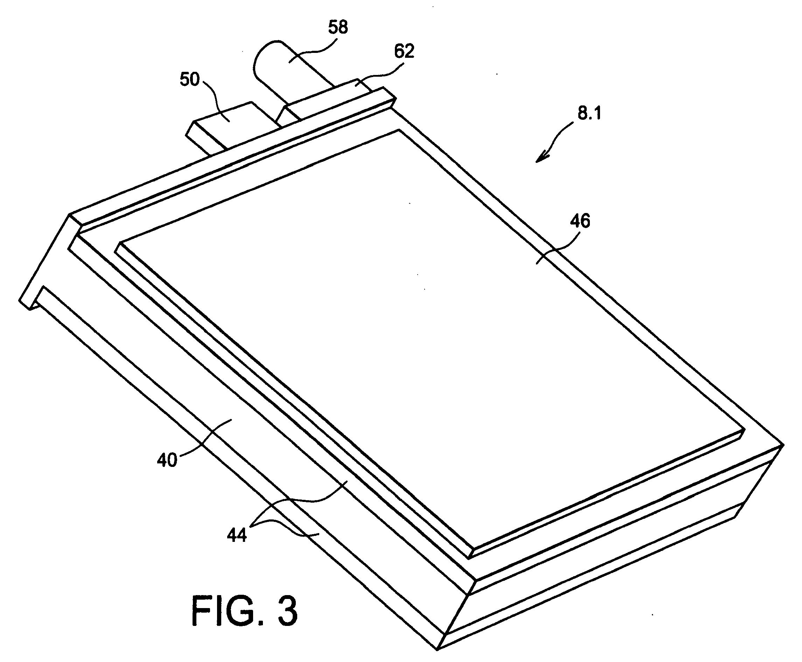

Cet embout 58 peut également être directement brasé sur la tête de l'âme 40, ce qui permet de supprimer le joint 64. Dans ce cas une isolation électrique est prévue en sortie de l'électrolyseur. Sur la figure 3, on peut voir le corps central 8.1 complet de la plaque d'électrolyse complète.

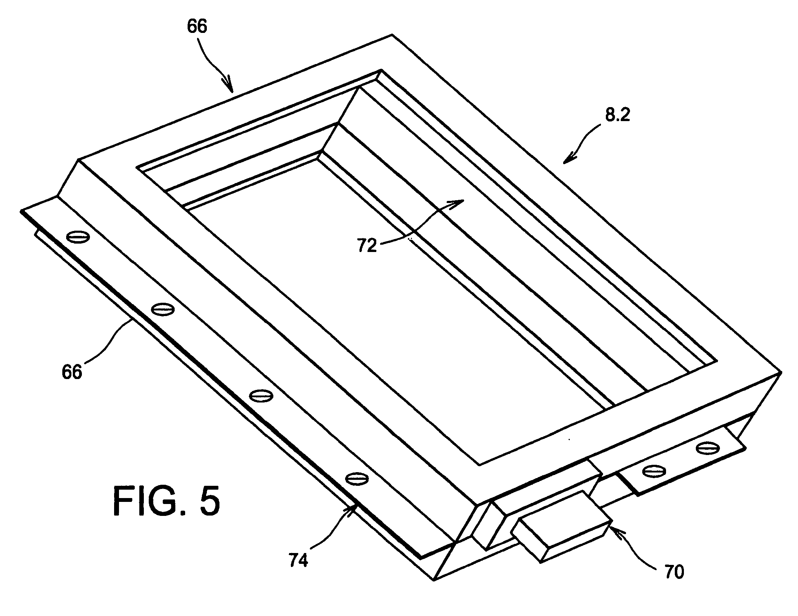

Sur la figure 5, on peut voir le cadre 8.2 formé de deux demi coques 66 métalliques destinées à venir de part et d'autre du corps central 8.1 et d'un système de fermeture/serrage 68, afin de comprimer le corps central 8.1 entre les deux demi-coques 66. La compression ainsi réalisée participe à la rigidité et l'étanchéité de la plaque d'électrolyse.

En outre, le cadre 8.2 est conducteur électrique par exemple en métal et assure de manière continue la liaison électrique entre la cathode 46 et une broche de cathode 70 portée par le cadre 8.2. La broche de cathode 70 est prévue de manière axialement opposée à la broche d'anode 50. Un joint d'isolation électrique 72 est prévu entre la tête de l'âme métallique 40 et le cadre 8.2 et entre les flans du corps central 8.1 et le cadre métallique 8.2. L'utilisation du cadre 8.2 pour relier la cathode à la broche de cathode 70 permet d'éviter de recourir à des câbles de connexions.

Les moyens de serrage sont par exemple du type vis écrou montés dans des brides latérales 74 des demi-coques 66, ces brides forment également les guides destinés à être reçus dans les glissières 22 du boîtier médian 4 de l'électrolyseur.

Les glissières 22 sont également munies de moyens isolant électrique 75 pour isoler les cathodes du caisson et éviter un court-circuit.

Il est à noter que le fonctionnement à haute pression de vapeur d'eau plaque très fortement et de manière continue, les différentes couches formant le corps central 8.1 de la plaque d'électrolyse les unes contre les autres, ce qui assure un fonctionnement performant des plaques d'électrolyse 8.

La pression du mélange vapeur d'eau/hydrogène étant beaucoup plus élevée que la pression de l'oxygène collecté par les moyens de drainage, plus la pression du mélange vapeur d'eau/hydrogène contenu dans l'enceinte d'électrolyse est élevée plus la cathode 46 est plaquée de manière forte et continue sur l'électrolyte 44, l'électrolyte 44 sur l'anode 42 et l'anode 42 sur l'âme métallique 40, et donc plus les contacts électriques entre ces différents éléments sont bons. Ceci favorise donc l'obtention de performances élevées et constante dans le temps pour ce type d'électrolyseur.

Par conséquent, lorsqu'on reprend l'expression de la tension à appliquer à la cellule d'électrolyse, le terme d'irréversibilité est formé d'un terme de chute ohmique et d'un terme de surtension d'activation $\Sigma\eta$. Or, à des températures supérieures à 800°C auxquelles l'électrolyseur selon la présente invention travaille, la réaction de dissociation de l'eau est activée par la température, elle ne nécessite donc qu'une très faible surtension d'activation $\Sigma\eta$, la tension totale aux bornes de la cellule d'électrolyse se réduit alors sensiblement à la somme de la tension à courant nulle et de la chute ohmique, qui varie linéairement avec la densité de courant. Par conséquent, grâce au plaquage de l'électrolyte sur l'anode et de l'anode sur l'âme métallique, le terme de chute ohmique est réduit, le terme d'irréversibilité est donc réduit, ce qui permet de fonctionner avec une endothermicité élevée. La réduction des pertes ohmiques est également obtenue en maintenant les canalisations électriques de forte intensité à l'extérieur de l'enceinte pour les maintenir à une température basse.

La présente invention présente également l'avantage de simplifier la réalisation des étanchéités entre les conduits oxygène et les conduits contenant de l'hydrogène et de les rendre plus efficace. En effet, en maintenant un débit suffisant en vapeur d'eau par rapport au débit d'hydrogène formé et en obtenant un mélange vapeur d'eau/ hydrogène homogène, les joints d'étanchéité sont soumis au niveau des plaques d'électrolyse à la surpression externe du mélange homogène vapeur d'eau contenant de l'hydrogène, et non à un surpression interne, les étanchéités sont alors plus faciles à réaliser. L'électrolyseur a donc une durée de vie augmentée.

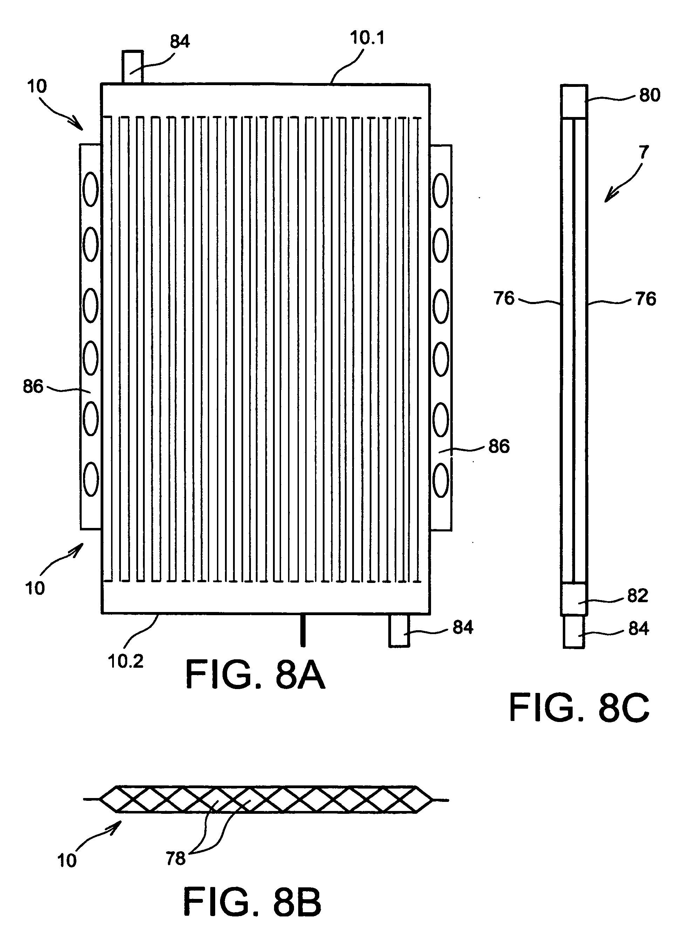

Nous allons maintenant décrire une plaque de chauffage 10 selon l'invention représentée sur les figures 8A à 8C.

La plaque de chauffage comporte deux tôles 76, par exemple en acier 800H ou en Hastelloy, embouties et soudées sur toute leur périphérie.

Entre des deux tôles 76, est disposé un corps d'échanges thermiques 78 comportant une ou plusieurs centaines de canaux s'étendant longitudinalement entre une extrémité supérieure 10.1 et une extrémité inférieure 10.2, dans lesquels va circuler le caloporteur.

Un collecteur d'admission 80 du caloporteur chaud est prévu au niveau de l'extrémité supérieure 8.1 et un collecteur de refoulement 82 du caloporteur froid est prévu au niveau de l'extrémité inférieure 8.2.

Des embouts 84, 86 sont prévus sur les collecteurs d'admission 80 et de refoulement 82, avantageusement ces embouts 84, 86 sont métalliques, brasés sur les collecteurs 80, 82.

Par ailleurs, deux guides 86 sont prévus sur les côtés latéraux de la plaque de chauffage 10 pour pénétrer dans les glissières 24 du caisson médian 4.

Nous allons maintenant décrire l'assemblage des différents éléments composant l'électrolyseur selon l'invention dans le cas d'un montage en série des plaques d'électrolyse 8.

Nous allons tout d'abord nous référer à la figure 7A.

La chambre inférieure 6 est fixée sur le caisson médian 4. La plaque d'électrolyse 8 est ensuite insérée dans le caisson médian 4 en faisant coulisser ses guides latéraux 74, dans les glissières 22.

La broche de cathode 70 pénètre dans l'ouverture 35 pratiquée à cet effet dans la chambre inférieure 6 dans le canal de refroidissement 36.

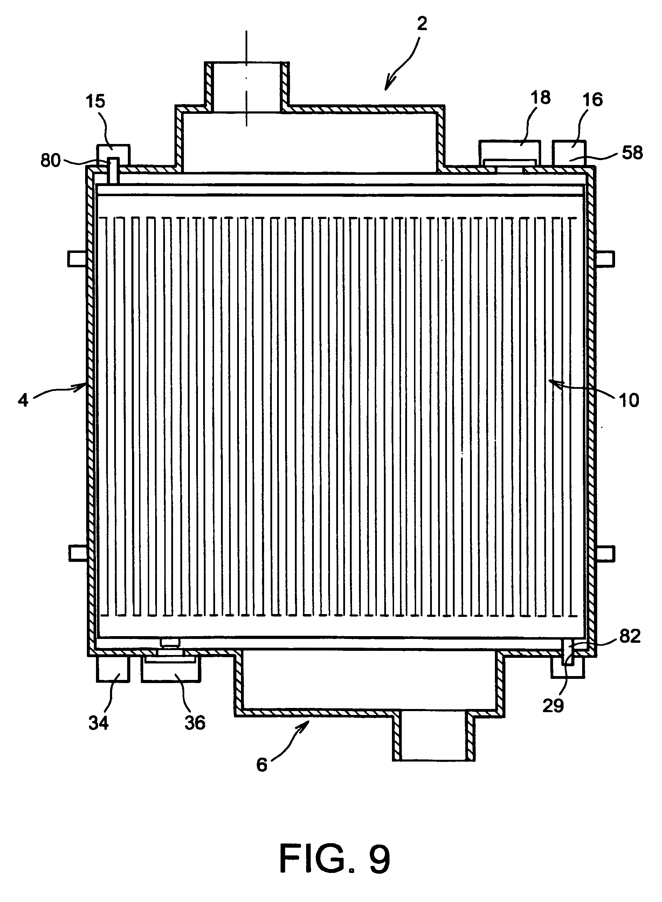

La plaque de chauffage 10 est ensuite insérée dans les glissières adjacentes 24 comme on peut le voir sur la figure 9, l'embout de sortie du caloporteur froid 86 traverse l'ouverture 29 prévue dans la chambre inférieure 6.

Ensuite une autre plaque d'électrolyse 78 est introduite dans le caisson médian 4, cette fois-ci de telle sorte que la broche d'anode 50 traverse une ouverture 35, comme cela est représenté sur la figure 7B. Un embout de collecte d'oxygène 58 traverse alors également un orifice 33 débouchant dans le canal de collecte d'oxygène 34.

Ensuite une nouvelle plaque de chauffage 10 est introduite de manière adjacente et de la même manière que la plaque de chauffage précédente et ainsi de suite, jusqu'à ce que le caisson soit rempli.

Il est à noter que les plaques d'électrolyse 8 sont introduites alternativement avec la broche d'anode 50 vers le haut et vers le bas, ce qui permet de réduire la longueur des connexions électrique comme nous le verrons par la suite, et de n'utiliser que des plaques d'électrolyse identiques.

La chambre supérieure 2 est ensuite disposée sur le caisson médian 4 de telle sorte que les broches d'anode 50 de cathode traversent les ouvertures 19, les embouts de collecte de l'oxygène 58 traversent les ouvertures 15 et les embouts d'alimentation en caloporteur chaud 84 traversent les ouvertures 13.

La chambre supérieure 2 est fixée sur le caisson médian 4.

Le conduit de caloporteur chaud 14 est relié à une source de caloporteur chaud, le conduit de collecte de l'oxygène 16 est relié un réservoir de stockage de l'oxygène, le conduit principal 20 est relié à un réservoir de récupération du mélange eau/hydrogène.

Les embouts d'admissions 84 sont brasés sur la face supérieure du renfoncement 11 de la chambre supérieure, ils sont ainsi reliés au canal caloporteur chaud. Le brasage permet d'éviter de devoir recourir à des moyens d'étanchéité supplémentaires, la durée de vie de l'électrolyseur en est donc augmentée.

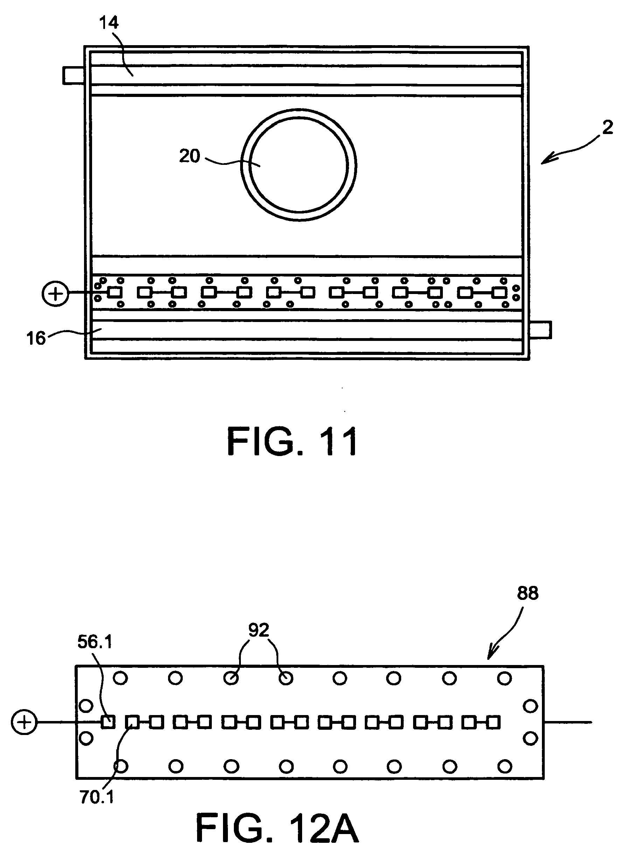

Les broches d'anode 50 et de cathode 70 débouchant de la chambre supérieure 2 sont reliées comme représentées sur la figure 11, le canal de refroidissement 18 ayant été omis. Cette connexion électrique permet un montage en série des plaques d'électrolyse 8 sans recourir à des câbles courant le long des plaques.

Les renfoncements dans les chambres supérieure 2 et inférieure 6 présentent l'avantage de réduire la longueur requise des broches d'anode et de cathode et ainsi de réduire les pertes par effet Joule.

Il est avantageusement prévu de disposer une plaque de connexion 88 représentée sur les figures 12A à 12C traversés par les broches d'anode 50 et de cathode 70.

Dans le cas d'un montage en série, cette plaque de connexion 88 est réalisée en céramique pour isoler les broches d'anode et/ou de cathode afin d'éviter un court-circuit.

Elle présente par exemple une épaisseur de un à plusieurs centimètres suivant le niveau de pression dans l'électrolyseur et son joint d'étanchéité assure l'étanchéité et l'isolation électrique des liaisons vis-à-vis du caisson d'électrolyse.

La plaque de connexion 88 comporte une série d'alésages 90 alignés pour le passage des broches d'anode 50 et des broches de cathode 70. Par ailleurs, la plaque 88 comporte sur sa périphérie des alésages 92 pour le passage de goujons de serrage 94 pour sa fixation sur la chambre d'alimentation 2 et la compression du joint d'étanchéité (non représenté).

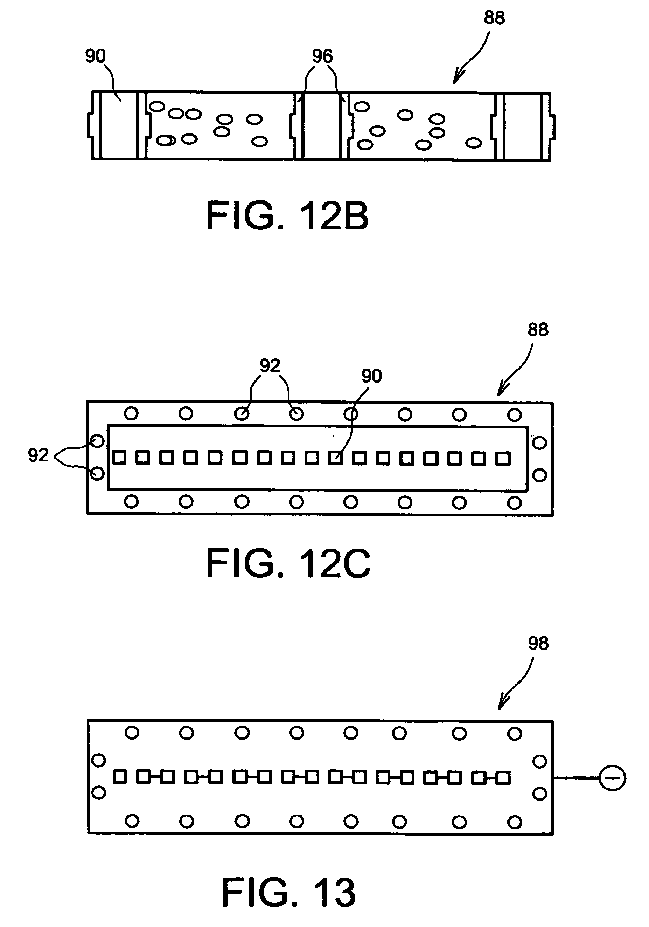

Sur la figure 12B représentant une coupe longitudinale de la plaque 88, on peut voir que chaque alésage 90 comporte un joint d'étanchéité 96. Sur la figure 12C, on peut voir la plaque 88 avec la connexion en série des plaques d'électrolyse.

Un joint d'étanchéité (non représenté) est prévu en la face inférieure de la plaque de connexion 88 et la surface extérieure de la chambre supérieure.

La broche d'anode 50.1 de la première plaque d'électrolyse 8 est reliée à l'alimentation électrique (non représentée), la broche de cathode 70.1 de la deuxième plaque d'électrolyse 8 est reliée à la broche d'anode 50.1 et ainsi de suite

Sur la figure 13, on peut voir une plaque d'étanchéité 98 similaire à la plaque 88 pour les connexions électriques sur la face extérieure de la chambre inférieure 6.

Dans le cas d'un montage parallèle, ces plaques de connexion 88, 98 peuvent être métalliques, plus généralement en matériau conducteur électrique ; les broches peuvent alors être directement brasées sur les plaques de connexion 88, 98.

En outre, dans l'exemple décrit, les broches d'anode et de cathode sont de section rectangulaire, cependant on peut prévoir qu'elles aient une section circulaire permettant un raccordement à des câbles de connexion par serre-câbles.

Dans l'exemple représenté, les plaques de connexion sont d'un seul tenant, mais on peut prévoir que celles-ci soient en plusieurs parties.

Les plaques de connexion 88, 98 munies de leur joint d'étanchéité 89 sont glissées sur les broches 50, 70 des plaques d'électrolyse puis vissées sur les chambres supérieure et inférieure.

Les broches 50, 70 sont brasées dans leur logement, les conduits 14, 30 d'écoulement du caloporteur sont sertis ou brasés pour former les canaux distributeur et collecteur ainsi que les conduits oxygène 16, 34.

Les canaux de circulation du caloporteur chaud et froid, d'évacuation de l'oxygène et de refroidissement des contacteurs électriques sont montés sur leurs conduits respectifs.

L'électrolyseur est destiné à fonctionner sous haute ou très haute pression. Pour cela l'électrolyseur comporte une enceinte apte à maintenir un gaz électrolytique sous haute ou très haute pression de plusieurs dizaines de bars.

Ce fonctionnement à haute pression, voire très haute pression, est rendu possible grâce à la présente invention, car les contraintes de mécaniques sont reprises en grande partie par l'enceinte de confinement métallique. Les autres éléments mécaniques, notamment les plaques d'électrolyse, sont quant à elles assujetties à des contraintes mécaniques beaucoup plus faibles. Par conséquent les contraintes de dimensionnement portent principalement sur l'enceinte et non sur les autres éléments de l'électrolyseur. Par ailleurs, les plaques d'électrolyses travaillent en compression puisque les gaz formés qu'elles contiennent sont à une pression plus faible que le gaz dans lequel elles baignent, comme cela a déjà été décrit.

Les plaques de chauffages travaillent également en compression dans le cas où la pression du caloporteur est inférieure à celle du gaz électrolytique, par exemple dans le cas des caloporteurs du type métal liquide ou sels fondus, ou avec des contraintes faibles de tension si la pression du caloporteur est de même niveau ou légèrement supérieure à celle du gaz électrolytique.

Ceci permet d'obtenir directement une production sous très haute pression de plusieurs dizaines de bars des gaz produits de l'électrolyse, ce qui permet de réduire le taux de compression nécessaire au stockage et transport des gaz produits par l'installation d'électrolyse. Le stockage et le transport s'effectuant actuellement dans la gamme de 30 à 130 bars pour l'hydrogène. La compression des gaz nécessite de compresseurs électriques en aval de l'électrolyseur, qui consomment beaucoup d'énergie.

Ceci permet également de réduire les vitesses d'écoulement du gaz d'électrolyse entre les différentes plaques donc les pertes de charge dans l'électrolyseur. Ceci permet aussi d'obtenir pour des valeurs importantes de la capacité de production de l'installation des dimensions acceptables de l'unité de production tout en maintenant des valeur de pertes de charge des écoulements de gaz ce qui va dans le sens d'une réduction de la consommation électrique des moyens de relevage de la pression dans les circuits.

Par ailleurs l'électrolyseur selon l'invention permet le fonctionnement à haute, voire très haute pression, des différents étages d'une usine de production avec comme seul équipement de compression les pompes d'alimentation en fluide à électrolyser de l'étage d'alimentation de l'usine. Cela permet de rendre plus compactes les différentes installations de l'usine et de réduire la consommation en électricité de l'usine en réduisant voire en rendant nul le nombre de compresseurs nécessaires et en réduisant la capacité des moyens de relevage de la pression dans les circuits du fait de la réduction des pertes de charge.

A titre d'exemple, un électrolyseur selon l'invention peut comporter 58 plaques d'électrolyse et 59 plaques de chauffage.

Une plaque d'électrolyse a par exemple une largeur de 0,16 m, une hauteur de 0,38 m et une épaisseur de 0,0133 m. La partie active d'une cathode peut alors former un rectangle de 0,35 m de hauteur et 0,119 m de largeur.

Les plaques de chauffage 10 ont des dimensions similaires aux plaques d'électrolyse 8 en hauteur et en largeur, les canaux peuvent avoir un diamètre hydraulique interne équivalent de 0,004 m l'épaisseur des tôles étant de 0,001 m, celle-ci peut être faible puisqu'il n'y a pas d'écart de pression entre le gaz caloporteur et vapeur d'eau, ce qui confère à la plaque une épaisseur externe de 0,006 m.

L'entrefer entre la plaque de chauffage et la plaque d'électrolyse est de 0,003 m.

Les dimensions internes du caisson médian sont alors les suivantes :

- hauteur : 0,38 m,
- largeur : 0,16 m,
- longueur : 1,48 m.

Cet électrolyseur permet de générer 0,05 mol/s d'hydrogène soit 4,320 Nm$^3$/h.

Le caloporteur et le mélange vapeur d'eau/hydrogène peuvent être en écoulement co-courant, l'entrée du caloporteur chaud s'effectue par le bas du même côté que le mélange vapeur d'eau/hydrogène, ou à contre-courant, l'entrée du caloporteur chaud s'effectue alors par le haut comme dans le cas représenté sur les figures 7A et 7B et 9, du côté opposé à l'entrée du mélange vapeur d'eau/hydrogène.

Le montage en série des plaques d'électrolyse qui permet de réduire l'intensité d'alimentation, et donc la taille de la tresse d'alimentation, et par voie de conséquence les pertes par effet Joules.

Dans un autre mode de réalisation, on peut prévoir de relier en parallèle les plaques d'électrolyse.

Selon une première variante, toutes les plaques d'électrolyse peuvent être montées en parallèle. Ce montage permet de braser directement les broches d'anode et de cathode sur les plaques de connexion.

Selon une autre variante, on prévoit de réaliser des groupes de plaques d'électrolyse connectés en série les groupes étant eux-mêmes connectés en parallèle. Ce montage en parallèle permet d'ajuster la différence de potentiel aux bornes de l'électrolyseur en fonction de celle disponible sur le réseau électrique. En effet, il est possible de regrouper un nombre déterminé de plaques d'électrolyse pour les connecter suivant le montage parallèle pour former des groupes de connexion G1, G2 en parallèle, puis de connecter ces groupes entre eux suivant le montage série.

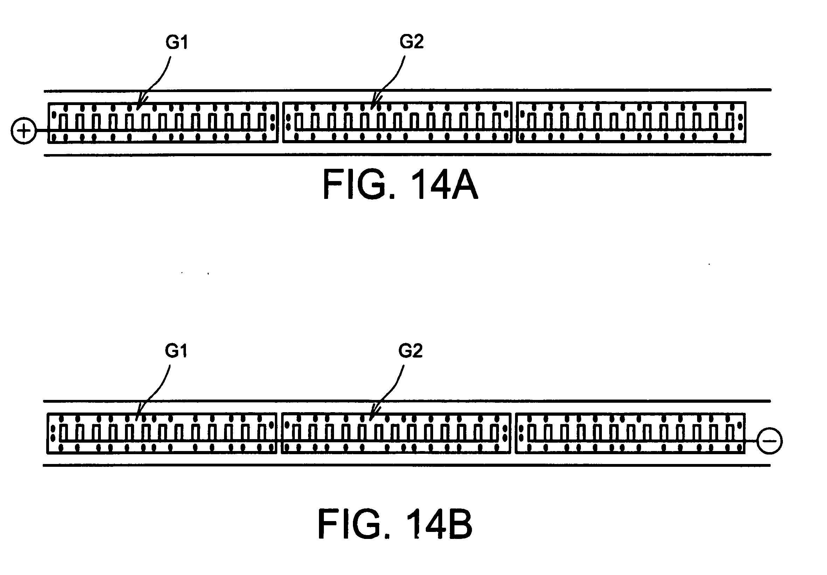

Pour cela il suffit, lors du montage des plaques d'électrolyse dans le caisson médian 4, de mettre toute les plaques d'un groupe de connexion G1 parallèle dans le même sens, par exemple avec la broche d'anode 50 vers le haut, puis celles du groupe de connexion suivant G2 dans le sens contraire, la broche d'anode 50 vers le bas et enfin de réaliser les connections électrique suivant les schémas de connexion représentés sur les figures 14A (connexion sur la chambre supérieure 2) et 14B (connexion sur la chambre inférieure 6).

L'électrolyseur selon la présente invention se prête avantageusement à ce type de montage, puisque les seuls éléments conducteurs électriques supportant l'intensité totale du groupe de connexion sont les tresses métalliques externes qui fonctionnent à basse température et dont la section peut être calculée en conséquence.

Les plaque d'électrolyse selon la présente invention présente l'avantage de permettre un montage série ou parallèle sans nécessité de modification de celles-ci, le sens d'insertion des plaques d'électrolyse suffit pour permettre un branchement en série ou en parallèle

Nous allons maintenant donner un exemple de dimensionnement d'un électrolyseur selon la présente invention, dans le cas où le réactif à décomposer est de la vapeur d'eau surchauffée à une température de 850°C sous une pression de 30 bars. A cette valeur de température la quantité totale d'énergie nécessaire pour dissocier une mole d'eau (et former une mole d'hydrogène) est de l'ordre de 247,2 kJ/mole dont une quantité d'énergie électrique de 167,2 kJ/mole et une quantité de chaleur de 80 kJ/mole. Pour une densité de courant de 2000 A/m$^2$, la différence de potentiel entre électrodes étant de l'ordre de 1,06 Volts, la chaleur dégagée par le passage du courant électrique à travers les électrodes et le passage des ions O$^{2-}$ à travers l'électrolyte est de l'ordre 37,4 kJ/mol. Il est donc possible de fournir une énergie de 42,6 kJ/mol directement sous forme de chaleur apportée par un fluide caloporteur s'écoulant dans les plaques de chauffage.

L'exemple décrit ci-dessus n'est qu'un point de fonctionnement, il est possible en diminuant le débit d'eau alimentaire d'augmenter la pression partielle d'hydrogène.

Le caloporteur choisi est de l'hélium à une température de 900°C sous une pression de 30 bars.

Afin de garantir le recouvrement des plaques d'électrolyse par de la vapeur d'eau, la valeur de débit d'eau alimentaire choisie est cinq fois supérieure à la valeur de débit d'hydrogène produit soit un débit de vapeur d'eau alimentaire pour l'unité de 0,25 mol/s.

On recherchera particulièrement un rapport de débit molaire vapeur d'eau/hydrogène produit dans l'intervalle 2 à 5, pour obtenir une pression de vapeur partielle d'hydrogène élevée tout en assurant un bon recouvrement des plaques d'électrolyse par la vapeur d'eau.

On fixe la largeur utile des plaques d'électrolyse à 0,119 m et leur hauteur à 0,35 m, la surface d'anode et de cathode par plaque est alors de 0,0833 m$^2$. Avec une densité de courant de 2000 A/m$^2$, le courant nécessaire pour une plaque est de 0,1663 kA sous une tension de 1,06V. La valeur élevée de l'intensité conduit à une épaisseur importante du support métallique d'anode (0,8 cm) afin de limiter sa résistance électrique et la chaleur dégagée.

Le nombre de plaques d'électrolyse est alors de 58 et le nombre de plaques de chauffage est alors de 59.

La production d'un tel électrolyseur de 0,05 mol/s, soit 4,32 Nm3/heure.

Une plaque d'électrolyse a une épaisseur hors tout de 0,0133 m

L'espace entre une plaque de chauffage et une plaque d'électrolyse (entrefer) est choisi égale à 0,003 m.

Une plaque de chauffage a une épaisseur de 0,006 m.

Le bloc médian a une longueur de 1,48 m une hauteur de 0,38 m et une largeur de 0,16 m. Les dimensions internes des chambres 2, 6 sont : une largeur de 0,16 m et une longueur de 1,48 m avec une profondeur de plusieurs dizaine de centimètre permettant d'assurer une bonne répartition et collecte de la vapeur d'eau et du mélange vapeur d'eau hydrogène.

Concernant le caloporteur, on cherche à obtenir une variation de température entrée/sortie de l'ordre de 35°; le débit total d'hélium pour apporter la quantité de chaleur nécessaire à la dissociation de 0,05 mol/s de vapeur d'eau est de 3 mol/s.

Nous allons décrire maintenant une simulation numérique de la thermique du fonctionnement en permanent, montrant l'efficacité de la présente invention, en particulier les faibles variations de température et l'homogénéité de répartition de la température au sein de l'électrolyseur, en particulier le long des plaques d'électrolyse.

Le code thermochimique de calcul de l'écoulement du réactif entre les plaques de chauffage et les plaque d'électrolyse prend en compte la chaleur de réaction nécessaire à chaque dissociation d'une molécule d'eau en contact avec une cathode d'une part et les échanges thermiques à travers les parois des plaques de chauffage avec le fluide caloporteur d'autre part.

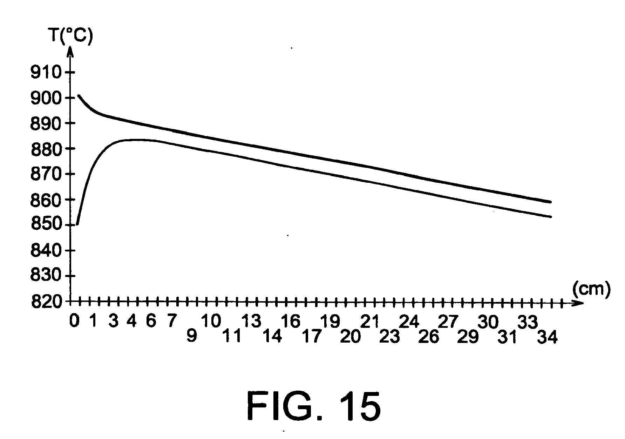

Sur la figure 15, sont représentées les représentations graphiques des valeurs de température du mélange eau vapeur/hydrogène en °C en trait plein dans le sens de son écoulement le long d'une cathode en cm, et de l'hélium, en tirets, utilisé comme fluide caloporteur.

A l'entrée du caisson d'électrolyse le débit de vapeur d'eau est de 0,25 mol/s pour une température de 850°C et une pression de 30 bars.

Pour l'hélium utilisé comme fluide caloporteur, la valeur de température d'entrée est de 900°C et la valeur de débit est de 3 mol/s

Les courbes peuvent être décomposées en deux zones :

- Une zone (de 12 cm de longueur) relativement courte dans ce cas (faible débit de vapeur par rapport au débit d'hélium caloporteur) de surchauffe de la vapeur d'eau. Dans cette partie, la chaleur fournie par les plaques chauffantes est supérieure à la chaleur nécessaire à la dissociation des molécules d'eau.

- Une zone d'équilibre ou de refroidissement où l'hélium des plaques chauffantes et le mélange eau/hydrogène se refroidissent de manière conjointe avec une pente d'autant plus faible que l'inertie thermique totale du système hélium, vapeur d'eau et hydrogène formé est plus élevée.

On constate sur la courbe de la figure 15 qu'avec un écart de seulement 50°C entre la température du caloporteur chaud et la température d'entrée de la vapeur d'eau :

- que la variation maximale de température de fonctionnement de la plaque d'électrolyse est inférieure à 33°C.
- que les valeurs de température d'entrée et sortie du mélange sont sensiblement égales avec une légère surchauffe en sortie, la température en entrée étant 850°C et celle en sortie étant de 854 °C. Il est d'ailleurs possible de moduler cet écart entre l'entrée et la sortie de l'électrolyseur en augmentant ou en diminuant le débit de caloporteur.

Cette courbe montre l'intérêt du dispositif puisque l'on peut obtenir un fonctionnement homogène d'une plaque d'électrolyse avec une valeur faible du débit de réactif.

Plus généralement, ce dispositif peut être dimensionné pour être particulièrement efficace dans le cas d'électrolyse de gaz à faible capacité calorifique massique en utilisant des caloporteurs liquides ou gazeux à forte valeur de capacité calorifique massique.

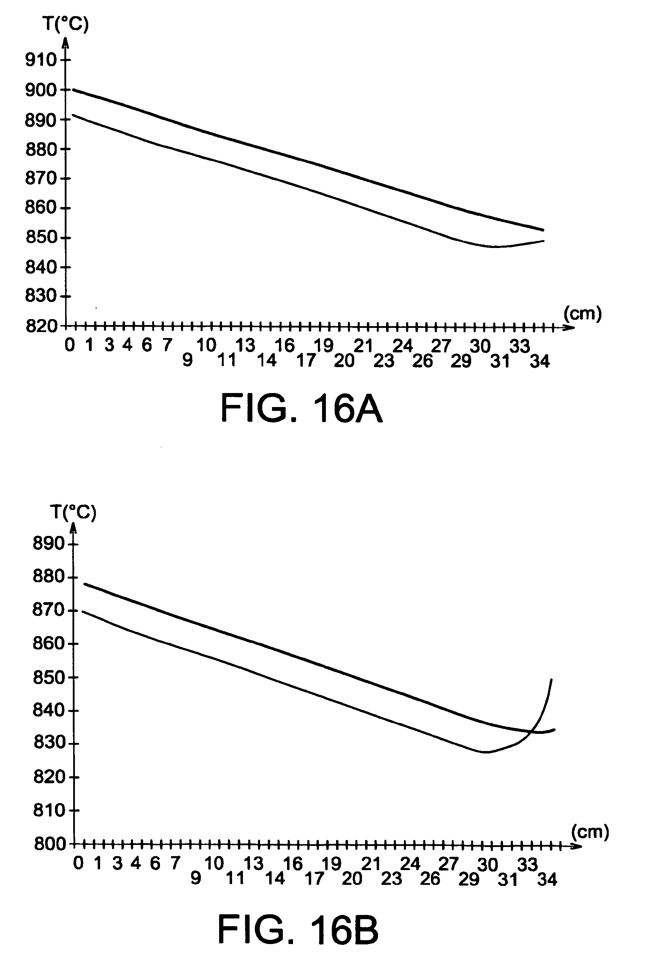

Sur les figures 16A et 16B, on peut voir une représentation graphique de la distribution de température en °C le long d'une cathode, plus généralement d'une plaque d'électrolyse en cm, dans le cas d'un écoulement à contre courant du caloporteur par rapport au mélange vapeur d'eau/hydrogène.

Deux cas de fonctionnement sont possibles :

- on souhaite un mélange vapeur d'eau hydrogène surchauffée en sortie de l'électrolyseur c'est le cas de la figure 16A où l'on conserve le même débit et la même température d'entrée du caloporteur. La surchauffe est alors de l'ordre de 40°C ce qui peut être particulièrement intéressant dans les cas où l'on veut établir une re-circulation de la vapeur d'eau ;
- on souhaite diminuer l'écart de température entre source chaude et valeur de consigne de température de fonctionnement stabilisée de l'électrolyseur, c'est le cas de la figure 16B, où avec le même débit de caloporteur on obtient une température de fonctionnement dans une fourchette de 20 °C autour de la consigne de 850°C avec un caloporteur chaud à seulement 879°C. Ces performances pourraient être encore améliorée en augmentant le débit du caloporteur.

A titre de comparaison, la figure 20 montre la variation de température du mélange vapeur d'eau hydrogène dans l'électrolyseur haute température décrit aux pages 7 et 8 en fonction de la distance d le long de la cathode en centimètre avec une valeur de débit molaire de vapeur quintuple du débit d'hydrogène produit, mais en l'absence de système de chauffage intégré.

On peut constater sur cette figure 20 que la variation de température entre l'entrée et la sortie de l'électrolyseur est supérieure à 220°C et qu'il faut une température d'entrée du mélange de 1075°C pour s'assurer d'une valeur de température de sortie de 850°C.

A titre d'exemple, grâce à l'invention avec une chaudière délivrant un caloporteur à 900°C on peut maintenir tout l'électrolyseur dans une gamme de haute température réduite [850°C-880°C] avec un débit de vapeur d'eau de seulement cinq fois le débit d'hydrogène produit tout en apportant 42 kJ par mole d'hydrogène produit sous forme de chaleur soit un cinquième de l'énergie électrique consommée (204 kJ/mole H2, le reste : 41 kJ/mole H2, est fourni par la vaporisation de l'eau en amont de l'électrolyseur par apport de chaleur dans un générateur de vapeur.

L'électrolyseur selon la présente invention a été décrit en utilisant comme exemple l'électrolyse de l'eau et la collecte d'oxygène, cependant il est bien entendu que l'architecture de l'électrolyseur selon la présente invention peut s'appliquer à l'électrolyse d'autres gaz et à la collecte de tout autre gaz.

L'électrolyseur décrit ci-dessus comporte une alimentation en fluide actif par le dessous, plus généralement dans l'axe des plaques, cependant on peut prévoir une alimentation latérale dans le caisson médian, de manière à avoir un flux d'alimentation orthogonal aux plaques d'électrolyse, ce qui permet de simplifier la conception de l'enceinte.

## Revendications

1. Electrolyseur pour électrolyse haute température apte à fonctionner en mode allothermique comportant une enceinte, au moins une plaque d'électrolyse comportant une anode et une cathode associées et des moyens de chauffage (10) d'un fluide actif destiné à subir une électrolyse haute température, l'enceinte étant apte à maintenir un bain électrolytique sous haute ou très haute pression de plusieurs dizaines de bars, lesdits moyens de chauffage (10) étant disposés dans l'enceinte et utilisent un fluide caloporteur, le fluide actif étant un gaz, les moyens de chauffage étant sous forme d'au moins une plaque disposée parallèlement et de manière adjacente à la plaque d'électrolyse (8), la plaque de chauffage (10) ayant sensiblement la même taille que la plaque d'électrolyse (8) et comporte une enveloppe métallique dans laquelle est disposé un corps d'échanges thermiques (78) comportant une pluralité de canaux s'étendant entre une extrémité (8.1) alimentée en fluide caloporteur chaud et une extrémité (8.2) reliée à un collecteur de fluide caloporteur froid.

2. Electrolyseur haute température selon la revendication 1, dans lequel le fluide caloporteur est un gaz sous haute pression, par exemple de l'hélium, un métal fondu, par exemple du zinc ou des sels fondus.

3. Electrolyseur haute température selon la revendication 1 ou 2, dans lequel la plaque d'électrolyse (8) comporte un corps central (8.1) formé par une âme (40) électriquement conductrice sous forme de plaque, recouverte sur ses deux faces par l'anode (42), elle-même recouverte par un électrolyte (44), lui-même recouvert par la cathode (46) et un cadre (8.2) électriquement conducteur entourant le corps central (8.1) et exerçant un effort de compression sur les couches formant le corps central (8.1).

4. Electrolyseur haute température selon la revendication 3, dans lequel une broche d'anode (50) est connectée à l'âme (40) pour relier l'anode (42) à une source de courant électrique et la cathode (46) est reliée électriquement au cadre (8.2) portant lui-même une broche de cathode (70), la broche d'anode (50) et la broche de cathode (70) étant disposées à des extrémités opposées l'une de l'autre de la plaque d'électrolyse (8).

5. Electrolyseur haute température selon la revendication 3 ou 4, comportant au moins un canal pratiqué dans l'anode et un embout de collecte (58) relié à ce canal pour amener le ou les gaz produits à l'anode à l'extérieur de l'électrolyseur, la pression du ou des gaz produits à l'anode étant inférieure à celle du bain électrolytique à la cathode, l'anode, l'électrolyte et la cathode étant ainsi pressés les uns contre les autres.

6. Electrolyseur selon la revendication précédente, comportant des canaux formés par des rainures (54) réalisées dans l'âme (40) et des réservoirs (56.1, 56.2), l'un des réservoirs (56.2) étant relié à l'embout de collecte (58) du ou des gaz connecté à un collecteur principal.

7. Electrolyseur haute température selon la revendication 6, comportant une pluralité de plaques d'électrolyse (8) et une pluralité de plaques de chauffage (10), les plaques de chauffage (10) étant disposées entre deux plaques d'électrolyse (8).

8. Electrolyseur haute température selon la revendication 7, dans lequel les plaques d'électrolyse (8) sont reliées électriquement en série, les plaques d'électrolyse (8) adjacentes étant montées dans l'enceinte de telle sorte que la broche d'anode (50) d'une plaque d'électrolyse (8) traverse une chambre inférieure (6) de l'enceinte et la broche d'anode (50) de la plaque adjacente traverse une chambre supérieure (2) de l'enceinte, la chambre inférieure (6) et la chambre supérieure (2) étant reliées par un caisson médian (4).

**9.** Electrolyseur haute température selon la revendication 7, dans lequel l'enceinte comporte une chambre inférieure (6), un caisson médian (4) et une chambre supérieure (2) et dans lequel les plaques d'électrolyse (8) sont reliées électriquement en parallèle.

**10.** Electrolyseur haute température selon la revendication 7, dans lequel l'enceinte comporte une chambre inférieure (6), un caisson médian (4) et une chambre supérieure (2) et dans lequel les plaques d'électrolyse (8) sont réparties en groupes reliées électriquement en parallèle, les groupes étant reliés entre eux en série, les plaques d'électrolyse (8) d'un même groupe étant montées dans le caisson de telle sorte que toutes les broches d'anode (50) de ces plaques traversent la même chambre inférieure (6) ou supérieure (2), deux groupes adjacents ayant leurs broches d'anode (50) ne traversant pas la même chambre.

**11.** électrolyseur haute température selon l'une des revendications 8 à 10, dans lequel les chambres supérieure (2) et inférieure (6) comportent des ouvertures de passage des embouts de fluide caloporteur, de collecte du gaz produit à l'anode et des broches d'anode et de cathode et un passage principal pour le fluide actif et dans lequel les ouvertures (19, 29) pour le passage des broches d'anodes (50) et de cathode (70) sont recouvertes par un canal de refroidissement (18) des connexions électriques.

**12.** Electrolyseur haute température selon la revendication 11, dans lequel les ouvertures (19, 29) pour le passage des broches d'anode (50) et de cathode (70) sont réalisées dans un renfoncement des chambres supérieure (2) et inférieure (6).

**13.** Electrolyseur haute température selon l'une des revendications 11 ou 12, dans lequel une plaque de connexion (88) est disposée autour des broches d'anode (50) et/ou de cathode (70) sur la chambre supérieure (2) à l'extérieur de celle-ci et une plaque de connexion (98) est disposée autour des broches d'anode (50) et/ou de cathode (70) sur la chambre inférieure (6) à l'extérieur de celle-ci.

**14.** Installation de production de gaz par électrolyse comportant :

- au moins un électrolyseur selon la revendication 7,
- une alimentation électrique à tension donnée,

dans laquelle les plaques d'électrolyse sont regroupées en plusieurs groupes, les plaques d'électrolyse étant reliées en série au sein d'un même groupe et les groupes étant reliés en parallèle, le nombre de plaques d'électrolyse de chaque groupe étant choisi de telle sorte que la tension de chaque groupe de plaques d'électrolyse soit proche de la tension donnée de l'alimentation électrique.

**15.** Procédé de fabrication de dihydrogène et de dioxygène par électrolyse à partir d'eau mettant en oeuvre un électrolyseur selon l'une quelconque des revendications 1 à 13, dans lequel la pression du bain d'électrolyse est sensiblement égale ou supérieure à la pression de stockage et/ou de distribution de dihydrogène ou de dioxygène, par exemple entre 30 bars et 130 bars.

**16.** Procédé de fabrication de dihydrogène et de dioxygène par électrolyse selon la revendication 15, dans lequel le rapport entre le débit molaire de vapeur d'eau et le débit molaire de dihydrogène produit a une valeur de 2 à 5.

**Claims**

**1.** An electrolyzer for high temperature electrolysis capable of operating in an allothermal mode, comprising an enclosure, at least one electrolysis plate comprising an anode and a cathode in combination and means (10) for heating an active fluid intended to undergo high temperature electrolysis, the enclosure being capable of maintaining an electrolyte bath under high or very high pressure of several tens of bars, said heating means (10) being positioned in the enclosure and use a heat transfer fluid, the active fluid being a gas, the heating means being in the form of at least one plate positioned parallel and adjacently to the electrolysis plate (8), the heating plate (10) substantially having the same size as the electrolysis plate (8) and comprises a metal casing in which a heat exchange body is positioned, comprising a plurality of channels extending between an end (8.1) supplied with hot heat transfer fluid and an end (8.2) connected to cold heat transfer fluid manifold.

**2.** The high temperature electrolyzer according to claim 1, wherein the heat transfer fluid is a gas under high pressure, for example helium, a molten metal, for example zinc or molten salts.

3. The high temperature electrolyzer according to claim 1 or 2, wherein the electrolysis plate (8) comprises a central body (8.1) formed by an electrically conducting core (40) as a plate, covered on both of its faces by the anode (42), itself covered with an electrolyte (44), itself covered by the cathode (46) and an electrically conducting frame (8.2) surrounding the central body (8.1) and exerting a compressive force on the layers forming the central body (8.1).

4. The high temperature electrolyzer according to claim 3, wherein an anode pin (50) is connected to the core (40) in order to connect the anode (42) to a source of electric current and the cathode (46) is electrically connected to the frame (8.2) itself bearing a cathode pin (70), the anode pin (50) and the cathode pin (70) being positioned at ends opposite to each other of the electrolysis plate (8).

5. The high temperature electrolyzer according to claim 3 or 4, comprising at least one channel made in the anode and a collecting end piece (58) connected to this channel for bringing the gas (es) produced at the anode to the outside of the electrolyzer, the pressure of the gas (es) produced at the anode being less than that of the electrolyte bath at the cathode , the anode, the electrolyte and the cathode being thereby pressed against each other.

6. The electrolyzer according to the preceding claim, comprising channels formed by grooves (54) made in the core (40) and reservoirs (56.1, 56.2), one of the reservoirs (56.1, 56.2) being connected to the end piece (58) for collecting gasses, connected to a main manifold.

7. The high temperature electrolyzer according to claim 6, comrpising a plurality of electrolysis plates (8) and a plurality of heating plates (10), the heating plates (10) being positioned between two electrolysis plates (8).

8. The high temperature electrolyzer according to claim 7, wherein the electrolysis plates (8) are electrically connected in series, the adjacent electrolysis plates (8) being mounted in the enclosure so that the anode pin (50) of an electrolysis plate (8) passes through the lower chamber (6) and the anode pin (50) of the adjacent plate passes through the upper chamber (2).

9. The high temperature electrolyzer according to claim 7, wherein the enclosure includes a lower chamber (6), a middle box (4), and an upper chamber (2) and wherein the electrolysis plates (8) are electrically connected in parallel.

10. The high temperature electrolyzer according to claim 7, the enclosure includes a lower chamber (6), a middle box (4), and an upper chamber (2) and wherein the electrolysis plates (8) are distributed in groups electrically connected in parallel, the groups being connected together in series, the electrolysis plates (8) of a same group being mounted in the box so that all the anode pins (50) of these plates pass through the same lower (6) or upper (2) chambers, two adjacent groups having their anode pins (50) not passing through the same chamber.

11. The high temperature electrolyzer according to any of claims 8 to 10, wherein the upper (2) and lower (6) chambers comprise apertures for letting through the end pieces for heat transfer fluid, for collecting the gas produced at the anode and anode and cathode pins and a main passage for the active fluid and wherein the apertures (19, 29) for letting through the anode (50) and cathode (70) pins are covered by a channel (18) for cooling the electric connections.

12. The high temperature electrolyzer according to claim 11, wherein the apertures (19, 29) for letting through the anode (50) and cathode (70) pins are made in a recess of the upper (2) and lower (6) chambers.

13. The high temperature electrolyzer according to claim 11 or 12, wherein a connecting plate (88) is positioned around the anode (50) and/or cathode (70) pins on the upper chamber (2) outside the latter and a connecting plate (98) is positioned around the anode (50) and/or cathode (70) pins on the lower chamber (6) outside the latter.

14. An installation for producing gas by electrolysis comprising:

   - at least one electrolyzer according to claim 7,
   - an electric power supply with a given voltage,

wherein the electrolysis plates are grouped in several groups, the electrolysis plates being connected in series within a same group and the groups being connected in parallel, the number of electrolysis plates of each group being selected so that the voltage of each group of electrolysis plates is close to the given voltage of the electric power supply.

15. A method for producing dihydrogen and dioxygen by electrolysis from water applying an electrolyzer according to any of claims 1 to 13, wherein the pressure of the electrolysis bath is substantially equal to or greater than the storage and/or distribution pressure of dihydrogen or dioxygen, for example between 30 bars and 130 bars.

16. The method for producing dihydrogen and dioxygen by electrolysis according to claim 15 wherein the ratio between the water vapour molar flow rate and the produced dihydrogen molar flow rate has a value from 2 to 5.

**Patentansprüche**

1. Elektrolyseur für eine Hochtemperatur-Elektrolyse, der in einem allothermischen Modus arbeiten kann, mit einem Behälter, mindestens einer Elektrolyseplatte aus Anode und zugehöriger Kathode und Heizeinrichtungen (10) zum Heizen eines aktiven Fluids, das einer Hochtemperatur-Elektrolyse unterzogen, werden soll, wobei der Behälter ein Elektrolytbad unter hohem oder sehr hohem Druck von mehreren zehn Bar halten kann, die Heizeinrichtungen (10) in dem Behälter angeordnet sind und ein Wärmeträgerfluid verwenden, das aktive Fluid ein Gas ist, die Heizeinrichtungen in Form mindestens einer Platte ausgebildet sind, die parallel zu der und angrenzend an die Elektrolyseplatte (8) angeordnet ist, und die Heizplatte (10) im Wesentlichen die gleiche Größe wie die Elektrolyseplatte (8) hat und eine Metallhülle aufweist, innerhalb derer ein Wärmeaustauschkörper (78) angeordnet ist, der mehrere Kanäle aufweist, die sich zwischen einem mit heißem Wärmeträgerfluid gespeisten Ende (8.1) und einem Ende (8.2) erstrecken, das mit einem Sammler von kaltem Wärmeträgerfluid verbunden ist.

2. Hochtemperatur-Elektrolyseur nach Anspruch 1, in welchem das Wärmeträgerfluid ein unter hohem Druck stehendes Gas, beispielsweise Helium, ein geschmolzenes Metall, beispielsweise Zink, oder geschmolzene Salze ist.

3. Hochtemperatur-Elektrolyseur nach Anspruch 1 oder 2, in welchem die Elektrolyseplatte (8) aufweist:

   einen zentralen Körper (8.1), der aus einer elektrisch leitenden Seele (40) in Form einer Platte besteht, die an ihren beiden Flächen von der Anode (42) bedeckt ist, die ihrerseits von einem Elektrolyten (44) bedeckt ist, der seinerseits von der Kathode (46) bedeckt ist, und
   einen elektrisch leitenden Rahmen (8.2), der den zentralen Körper (8.1) umgibt und einen Pressdruck auf die den zentralen Körper (8.1) bildenden Schichten ausübt.

4. Hochtemperatur-Elektrolyseur nach Anspruch 3, in welchem ein Anodenstift (50) mit der Seele (40) verbunden ist, um die Anode (42) mit einer elektrischen Stromquelle zu verbinden, und die Kathode (46) elektrisch mit dem Rahmen (8.2) verbunden ist, der seinerseits einen Kathodenstift (70) trägt, wobei der Anodenstift (50) und der Kathodenstift (70) an gegenüberliegenden Enden der Elektrolyseplatte (8) angeordnet sind.

5. Hochtemperatur-Elektrolyseur nach Anspruch 3 oder 4 mit mindestens einem in die Anode eingearbeiteten Kanal und einem mit diesem Kanal verbundenen Sammelleitungsstück (58), um das oder die an der Anode erzeugte Gas bzw. erzeugten Gase aus dem Elektrolyseur herauszuführen, wobei der Druck des oder der an der Anode erzeugten Gases bzw. Gase niedriger ist als derjenige des Elektrolytbads an der Kathode, wodurch die Anode, der Elektrolyt und die Kathode gegeneinander gepresst werden.

6. Hochtemperatur-Elektrolyseur nach dem vorstehenden Anspruch mit Kanälen, die aus in die Seele (40) eingearbeiteten Rillen (54) gebildet sind, und Reservoiren (56.1, 56.2), wobei eines der Reservoire (56.2) mit dem an einem Hauptsammler angeschlossenen Sammelleitungsstück (58), das zum Sammeln des Gases oder der Gase dient, verbunden ist.

7. Hochtemperatur-Elektrolyseur nach Anspruch 6 mit mehreren Elektrolyseplatten (8) und mehreren Heizplatten (10), wobei die Heizplatten (10) zwischen zwei Elektrolyseplatten (8) angeordnet sind.

8. Hochtemperatur-Elektrolyseur nach Anspruch 7, in welchem die Elektrolyseplatten (8) elektrisch in Serie verbunden sind, wobei die benachbarten Elektrolyseplatten (8) derart in dem Behälter angeordnet sind, dass der Anodenstift (50) einer Elektrolyseplatte (8) durch eine untere Kammer (6) der Zelle hindurchgeht und der Anodenstift (50) der benachbarten Platte durch eine obere Kammer (2) der Zelle hindurchgeht, wobei die untere Kammer (6) und die obere Kammer (2) über einen mittleren Kasten (4) miteinander verbunden sind.

9. Hochtemperatur-Elektrolyseur nach Anspruch 7, in welchem der Behälter eine untere Kammer (6), einen mittleren Kasten (4) und eine obere Kammer (2) aufweist, wobei die Elektrolyseplatten (8) elektrisch parallel verbunden sind.

10. Hochtemperatur-Elektrolyseur nach Anspruch 7, in welchem der Behälter eine untere Kammer (6), einen mittleren Kasten (4) und eine obere Kammer (2) aufweist und in welchem die elektrisch parallel verbundenen Elektrolyseplatten (8) in Gruppen verteilt sind, die Gruppen untereinander in Serie verbunden sind, die Elektrolyseplatten (8) einer Gruppe derart in dem Kasten angeordnet sind, dass alle Anodenstifte (50) dieser Platten durch die gleiche Kammer, untere (6) oder obere (2), hindurchgehen, und die Anodenstifte (50) zweier benachbarter Gruppen nicht durch die gleiche Kammer hindurchgehen.

11. Hochtemperatur-Elektrolyseur nach einem der Ansprüche 8 bis 10, in welchem die obere (2) und die untere (6) Kammer Öffnungen zum Durchgang von Leitungsstücken des Wärmeträgerfluids, des Sammlers des an der Anode erzeugten Gases und von Anoden- und Kathodenstiften und einen Hauptdurchgang für das aktive Fluid aufweisen und in welchem die Öffnungen (19,29) für den Durchgang der Anodenstifte (50) und Kathodenstifte (70) von einem Kühlkanal (18) bedeckt sind, der zum Kühlen der elektrischen Verbindungen dient.

12. Hochtemperatur-Elektrolyseur nach Anspruch 11, in welchem die Öffnungen (19,29) für den Durchhang der Anodenstifte (50) und Kathodenstifte (70) in einem rückspringenden Abschnitt der oberen (2) und unteren (6) Kammer gebildet sind.

13. Hochtemperatur-Elektrolyseur nach einem der Ansprüche 11 oder 12, in welchem eine Verbindungsplatte (88) um die Anodenstifte (50) und/oder Kathodenstifte (70) herum an der oberen Kammer (2) und außerhalb dieser angeordnet ist und eine Verbindungsplatte (98) um die Anodenstifte (50) und/oder Kathodenstifte (70) herum an der unteren Kammer (6) und außerhalb dieser angeordnet ist.

14. Anlage zur Erzeugung von Gas mittels Elektrolyse mit:

   - mindestens einem Elektrolyseur nach Anspruch 7,
   - einer elektrischen Versorgung mit gegebener Spannung,

   in welcher die Elektrolyseplatten in mehreren Gruppen angeordnet sind, wobei innerhalb einer Gruppe die Elektrolyseplatten in Serie verbunden sind und die Gruppen parallel verbunden sind, und wobei die Anzahl von Elektrolyseplatten jeder Gruppe derart gewählt ist, dass die Spannung jeder Gruppe von Elektrolyseplatten annähernd, die gegebene Spannung der elektrischen Versorgung ist.

15. Verfahren zum Herstellen von Diwasserstoff und Disauerstoff mittels Elektrolyse aus Wasser unter Verwendung eines Elektrolyseurs nach einem der Ansprüche 1 bis 13, wobei der Druck des Elektrolysebads im Wesentlichen gleich oder höher als der Speicherungs- und/oder Verteilungsdruck von Diwasserstoff oder Disauerstoff, zum Beispiel zwischen 30 Bar und 130 Bar, ist.

16. Verfahren zur Herstellung von Diwasserstoff und Disauerstoff mittels Elektrolyse nach Anspruch 15, in welchem das Verhältnis zwischen das Moldurchstaz von Wasserdampf und der Moldurchstaz von erzeugtem Diwasserstoff einen Wert von 2 bis 5 hat.

FIG. 1A

FIG. 1B

**FIG. 2A**

FIG. 2B

EP 2 181 202 B1

FIG. 3

FIG. 4

EP 2 181 202 B1

FIG. 5

FIG. 6

EP 2 181 202 B1

**FIG. 7A**

## FIG. 7B

FIG. 8A

FIG. 8B

FIG. 8C

FIG. 9

# FIG. 10

## FIG. 11

## FIG. 12A

FIG. 12B

FIG. 12C

FIG. 13

FIG. 14A

FIG. 14B

FIG. 15

FIG. 16A

FIG. 16B

FIG. 17

FIG. 18

FIG. 19

FIG. 20

## RÉFÉRENCES CITÉES DANS LA DESCRIPTION

**Documents brevets cités dans la description**

- WO 2004113590 A

**Littérature non-brevet citée dans la description**

- **Yo SHIN.** *INTERNATIONAL OF HYDROGEN EN- ERGY,* 2007, vol. 32, 1486-1491